# EUROPEAN PATENT SPECIFICATION

(11) **EP 3 539 844 B1**
(45) Date of publication and mention of the grant of the patent: **08.10.2025**
(21) Application number: 16921004.4
(22) Date of filing: 08.11.2016
(51) Int. Cl.: G06Q 10/06, B61L 27/00, B60L 15/40

(54) **TRANSPORTATION SYSTEM, SCHEDULE PROPOSAL SYSTEM, AND TRAIN OPERATIONS SYSTEM**
TRANSPORTSYSTEM, PLANVORSCHLAGSSYSTEM SOWIE ZUGBETRIEBSSYSTEM
SYSTÈME DE TRANSPORT, SYSTÈME DE PROPOSITION D'HORAIRES ET SYSTÈME DE FONCTIONNEMENT DE TRAIN

(43) Date of publication of application: 18.09.2019
(73) Proprietor: Hitachi, Ltd., Tokyo 100-8280 (JP); Ansaldo STS S.p.A., 16151 Genova (IT)
(72) Inventor: OOTSUKA, Rieko, Tokyo 100-8280 (JP); AMIYA, Noriharu, Tokyo 100-8280 (JP); KOIWA, Hiroaki, Tokyo 100-8280 (JP); YAGYU, Daisuke, Tokyo 100-8280 (JP); SUKEDA, Hiroko, Tokyo 100-8280 (JP); SATOU, Yuuichi, Tokyo 100-8280 (JP); KUROKAWA, Kouichirou, Tokyo 100-8280 (JP); DRAGO, Alfredo, Genova 16151 (IT)
(74) Representative: Mewburn Ellis LLP
(86) International application number: PCT/JP2016/083079
(87) International publication number: WO 2018/087811

(56) References cited:
- WO-A1-2015/063823
- WO-A2-2006/018304
- JP-A- 2006 143 088
- JP-A- 2007 015 424
- JP-A- H06 138 822
- LIU X ET AL: "Detecting and counting people in surveillance applications", PROCEEDINGS. IEEE CONFERENCE ON ADVANCED VIDEO AND SIGNAL BASED SURVEILLANCE, 2005. COMO, ITALY SEPT. 15-16, 2005, PISCATAWAY, NJ, USA,IEEE, PISCATAWAY, NJ, USA, 15 September 2005 (2005-09-15), pages 306 - 311, XP010881193, ISBN: 978-0-7803-9385-1, DOI: 10.1109/AVSS.2005.1577286
- ORANSIRIKUL THONGTAT ET AL: "Feasibility of Analyzing Wi-Fi Activity to Estimate Transit Passenger Population", 2014 IEEE 28TH INTERNATIONAL CONFERENCE ON ADVANCED INFORMATION NETWORKING AND APPLICATIONS, IEEE, 23 March 2016 (2016-03-23), pages 362 - 369, XP032903547, ISSN: 1550-445X, [retrieved on 20160519], DOI: 10.1109/AINA.2016.68

## Description

### Technical Field

The present invention relates to a method for operating trains and a transportation system that dynamically adjust the number of trains to be operated based on an increase or decrease in passengers' demands.

### Background Art

As a major factor of a comfort level of public transportation represented by railway transportation, there is a degree of congestion of trains. When a passenger capacity utilization rate of a train increases, it may take time for passengers to get on and off the train at a station, trains in the vicinity of the train may be out of schedule, and scheduled operations may not be enabled. WO 2006/018304 A2 proposes a guidance and security system for transport systems which includes an integrated automatic passenger counting mechanism. WO 2015/063823 A1 proposes a train schedule preparation assist system having a passenger flow prediction device which, upon detection of a modification in an external factor, predicts the number of passengers boarding trains between stations in a target track section on the basis of a past passenger flow measurement result associated with the modified external factor.

As a related-art technique made to handle the aforementioned circumstances, there is PTL1. PTL1 discloses a technique for newly generating a schedule based on train assignment such as the number of trains to be operated on a railway line for a section, the number of trains able to be delivered from garages, and the like when a director responsible for a train operation management task instructs to increase a transportation capacity. In addition, PTL2 and PTL3 disclose techniques for detecting increases and reductions in the numbers of users in a station and the flow of users in the station and adjusting departure time of trains.

### Citation List

### Patent Literature

PTL 1: Japanese Patent Application Laid-Open No. Hei 7-315222
PTL 2: Japanese Patent Application Laid-Open No. 2014-233989
PTL 3: Japanese Patent Application Laid-Open No. 2015-182623

### Summary of Invention

### Technical Problem

In a method described in PTL1, a director instructs to increase a transportation capacity. Thus, the increase in the transportation capacity needs to rely on the individual, and it is difficult to determine details of the increase in the transportation capacity. In methods described in PTL 2 and PTL 3, departure time of trains is adjusted and the number of trains to be operated is not increased and reduced. Both PTL 2 and PTL 3 pay attention to the alleviation of congestion. In both PTL2 and PTL3, however, public transportation may provide an excess transportation capacity. When the number of trains to be operated is reduced so that passengers do not feel inconvenient, the service cost may be reduced and it may be expected to improve satisfaction of passengers.

Thus, a transportation system is provided, which is capable of always collecting information on passengers at a station, predicting travel demands of passengers in real time, and increasing and reducing the number of trains to be operated based on increases and decreases in the travel demands.

### Solution to Problem

A representative example of the invention disclosed in the present specification is as follows. In a first aspect, the invention provides a transportation system as set out in claim 1. In a second aspect, the invention provides a method for operating trains on a railway line as set out in claim 5.

### Advantageous Effects of Invention

A transportation system and method capable of increasing and reducing the number of trains to be operated based on travel demands of passengers may be enabled.

### Brief Description of Drawings

Figure 1 is a diagram showing a system configuration according to an example.
Figure 2A is a diagram showing data stored in a data storage unit 150 of a data server 111.
Figure 2B is a diagram showing programs stored in a storage unit 160 of a computing server 112.
Figure 3 shows an example of a railway map according to the example.
Figure 4 is a diagram showing a data structure of master information 156.
Figure 5 is a diagram showing a data structure of train position information 153.
Figure 6 is a diagram showing a data structure of train state information 154.
Figure 7 is a diagram showing a data structure of information 151 indicating the numbers of passengers who wait for trains.
Figure 8 is a diagram showing a data structure of information 152 indicating the numbers of passengers on trains.
Figure 9 is a diagram showing a data structure of travel demand information 155.
Figure 10 is a flowchart of a travel demand prediction program 400.
Figure 11 is a diagram showing a data structure of results of predicting the numbers of passengers who wait for trains.
Figure 12 is a diagram showing a data structure of congestion threshold range information 157.
Figure 13 is a flowchart of a program 440 for determining increases and reductions in the numbers of trains to be operated.
Figure 14 is a diagram showing a data structure of results 158 of determining increases and reductions in the numbers of trains to be operated.
Figure 15 is a flowchart of a schedule proposal generation program 460.
Figure 16 is a diagram showing a data structure of updated schedule information 159.
Figure 17 is a flowchart of an effect analysis program 480.
Figure 18 is a diagram showing an example of a screen distributed by an information distributing server 113.
Figure 19 is a diagram showing an example of the screen distributed by the information distributing server 113.
Figure 20 is a diagram showing an example of the screen distributed by the information distributing server 113.
Figure 21 is a diagram showing an example of the screen distributed by the information distributing server 113.

### Description of Embodiment

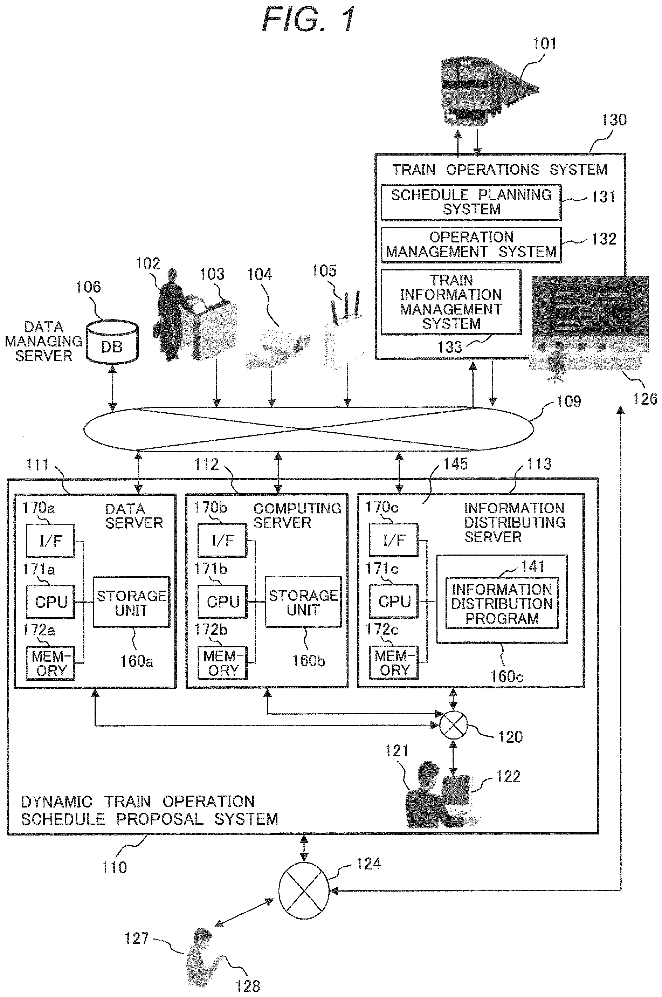

An example of the present invention is described with reference to Figures 1 to 21. The example describes a railway transportation service but is suitable for a transportation system for operating trains on a predetermined railway line with a plurality of stations (stops) and can be used by many and unspecified persons. For example, the example is applicable to a fixed-route bus that travels through multiple stops.

A configuration of a transportation system according to the example is described with reference to Figure 1 using a railway transportation service as an example. In recent years, automatic ticket gates 103 are installed at many railway stations. Each of the automatic ticket gates 103 reads a noncontact IC card (or a mobile terminal having the same function) or a magnetic ticket so that a user 102 is allowed to enter or exit into or from a station. Information read by the automatic ticket gates 103 is transmitted via a network 109 to a data managing server group 106 managed by a railway operator and is accumulated as gate pass-through data. The gate pass-through data includes information indicating stations in which passengers entered to use trains, time when the passengers entered the stations, and stations from which the passengers exited, time when the passengers exited from the stations.

A monitoring camera 104 is installed near a ticket gate or at a platform in many cases. A spatial range in which the single monitoring camera captures an image is limited. Thus, in general, multiple monitoring cameras are installed near ticket gates, at platforms, in passages, and in stairs at a single station. Video data acquired by the monitoring camera 104 can be confirmed in real time in a control center for managing railway operations or the like via the network 109. A technique for detecting a person from a video image captured by the monitoring camera 104 and counting the number of persons staying in a certain space has been developed.

With the widespread use of a public wireless LAN usable at stations and in trains, access points 105 tend to be installed at various places. The public wireless LAN may be provided by an operator other than railway operators. The public wireless LAN is a service providing connections to the Internet via wireless LANs. The user 102 connects a mobile terminal such as a laptop PC, a tablet PC, a smartphone, or the like to the Internet via an access point 105. A range in which a radio wave reaches from a single access point is approximately several tens of meters in general. Thus, in a large space such as a station, multiple access points are installed. When a mobile terminal can communicate with multiple access points 105, the access points 105 execute communication using SSIDs identifying networks in order to prevent interference. The access points 105 can acquire connection start time and connection end time of mobile terminals.

In general, multiple access points 105 are installed near ticket gates and at platforms in a station yard, the position of the mobile terminal of the user 102 can be roughly estimated based on the intensities of radio waves between the access points 105 and the mobile terminal. Alternatively, by chronologically tracking access points 105 to which mobile terminals are connected, movements of passengers in the station yard can be estimated. When the user 102 uses a public wireless LAN service that can be used by registering a MAC address that is an identifier of the mobile terminal or the like, movement records of the mobile terminal can be acquired from connection data of a wireless LAN. Connection information of the access points 105 installed in the station yard is transmitted to the data managing server group 106 in real time.

In the example, the number of users 102 of the station, railway lines to be used by the users 102, and the like are estimated based on information from the automatic ticket gates 103, the monitoring camera 104, and the access points 105 as described later. An estimation method is not limited to a method using all these devices. The estimation method is likely to be enabled with existing equipment of a station and can be executed without requiring significant investment in equipment.

A train 101 is operated based on a train operations system 130 owned by a railway operator. The train operations system 130 includes a schedule planning system 131, an operation management system 132, and a train information management system 133 as subsystems. The schedule planning system 131 generates a schedule for the train 101. The operation management system 132 manages whether the train 101 is operated in accordance with the schedule generated by the schedule planning system 131. The train information management system 133 acquires and collects various types of information from the train 101 in service and transmits the information to a traincrew member and an operation management center 126. When the train information management system 133 is used, the positions of trains, train numbers, train failure information, and the like are transmitted from the trains and accumulated in the operation management center 126. A sensor that can measure the weight of the train 101 is attached to the train 101 in order to adjust braking strength. The sensor can collect measured values of the weight of the train and estimate information of passengers on the train 101 from an average weight per passenger.

A dynamic train operation schedule proposal system 110 may be owned by the railway operator as a part of a railway management system. Alternatively, the dynamic train operation schedule proposal system 110 may be owned by a service operator different from the railway operator, and the service operator may propose a train operation schedule to the railway operator. The dynamic train operation schedule proposal system 110 includes a data server 111, a computing server 112, and an information distributing server 113. These servers are connected to and able to communicate with a computer 122 used by a system operator (railway operator when the system 110 is owned by the railway operator) 121 via a network 120. In addition, the dynamic train operation schedule proposal system 110 can communicate with the operation management center 126 and a terminal 128 used by a passenger 128 or the like via a network 124.

Servers forming the dynamic train operation schedule proposal system 110 are described below. The example describes the dynamic train operation schedule proposal system 110 as three server groups. The dynamic train operation schedule proposal system 110, however, can be physically configured as a single computer or can be configured as a computer system composed of multiple computers logically or physically configured. The dynamic train operation schedule proposal system 110 may operate with different threads on the same computer or may operate on a virtual computer built in multiple physical computer resources.

Basic configurations of the servers are the same. Each of the servers is a computer including a network interface (I/F) 170, a processor (CPU) 171, a memory 172, and a storage unit 160. The network interface 170 connects the server to the networks 109 and 120. The processor 171 executes a program stored in the memory 172. The memory 172 includes a ROM (Read Only Memory), which is a nonvolatile storage element, and a RAM (Random Access Memory), which is a volatile storage element. In the ROM, a fixed program, for example, a BIOS (Basic Input Output System) or the like, is stored. The RAM is a high-speed and volatile storage element such as a DRAM (Dynamic Random Access Memory) and temporarily stores a program to be executed by the processor 171 and data to be used upon the execution of the program. The storage unit 160 is, for example, a large-capacity and nonvolatile storage device such as a magnetic storage device (HDD (Hard Disc Drive)), a flash memory (SSD (Solid State Drive)), or an optical drive and stores the program to be executed by the processor 171 and the data to be used upon the execution of the program. Multiple storage devices may be installed as the storage unit, and the program and the data may be distributed and stored in the multiple storage devices.

In addition, a keyboard, a mouse, and the like may be connected to each of the servers. An input interface for receiving input from an operator, a display device, a printer, and the like may be connected to each of the servers. Each of the servers may include an output interface for outputting execution results of the program so that the operator can visually confirm the execution results of the program. In addition, the program to be executed by each of the servers is provided to each of the servers via a network or a removable medium (optical disc, flash memory, or the like). Thus, each of the servers may include an interface for reading data from the removable medium.

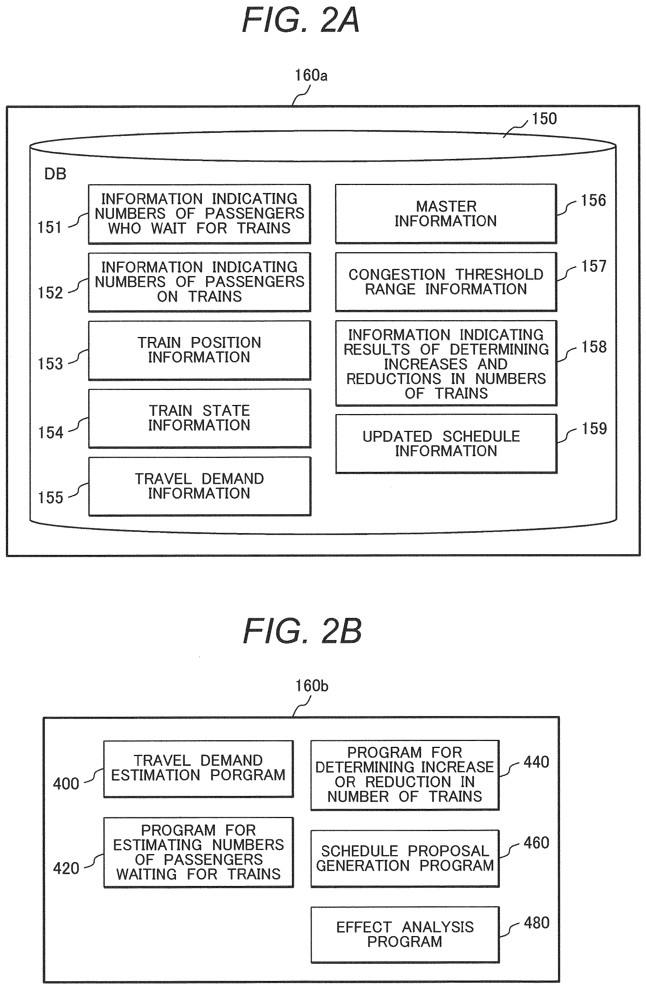

First, the data server 111 is described. Information from the devices (103, 104) within the station yard and the access points 105, information output from the train information management system 133 and indicating the numbers of passengers on trains, and the like are transmitted via the network 109 to the data server 111 when new data is acquired or at predetermined time intervals (time intervals of several minutes, several hours, or the like, depending on intervals of trains). The data server 111 causes the received data to be stored in a data storage section (DB) 150 of a storage unit 160a. As shown in Figure 2A, the data storage section 150 stores information 151 indicating numbers of passengers who wait for trains, information 152 indicating numbers of passengers on trains, train position information 153, train state information 154, travel demand information 155, master information 156 indicating structures of stations and railway lines, congestion threshold range information 157, results 158 of determining increases and reductions in the numbers of trains to be operated, and updated schedule information 159. Details of the data are described later.

Next, the computing server 112 uses a data group accumulated in the data server 111 to execute arithmetic processing in order to propose increases and reductions in the numbers of trains to be operated. As shown in Figure 2B, a storage unit 160b stores a travel demand prediction program 400, a program 420 for predicting the numbers of passengers who wait for trains, a program 440 for determining an increase or reduction in the number of trains to be operated, a schedule proposal generation program 460, an effect analysis program 480, and intermediate data generated during a computation process. The programs are read from the storage unit 160b, loaded into a memory 172b, and executed by a processor 171b. Data to be analyzed is acquired from the data server 111 and temporarily stored in the memory 172b. The processor 171b reads the programs from the storage unit 160b and executes the programs. These programs are automatically executed at predetermined time intervals (of, for example, several seconds, several minutes, or the like). The predetermined time intervals may vary based on time zones. Details of the programs are described later.

Next, the information distributing server 113 stores, in the storage unit 160c, a program such as an information distribution program 141 and intermediate data generated during a computation process. The information distributing server 113 is accessed from the system operator 121, the operation management center 126, or the terminal 128 used by the passenger 127 via the networks 120 and 124 and provides information.

The system operator 121 of the dynamic train operation schedule proposal system 110 can confirm configurations and states of data accumulated in the dynamic train operation schedule proposal system 110 from the terminal 122 via the network 120, the state of the computing server 112, computation results of the computing server 112, search request from users, and the like.

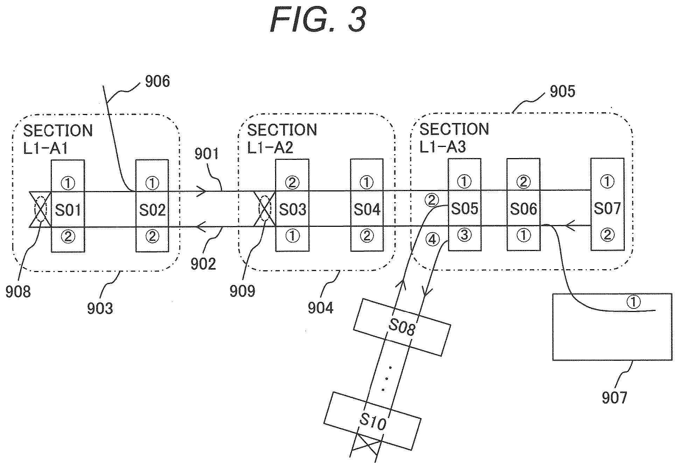

The operation schedule proposal system according to the example is described using a railway shown as a railway map shown in Figure 3 as an example.

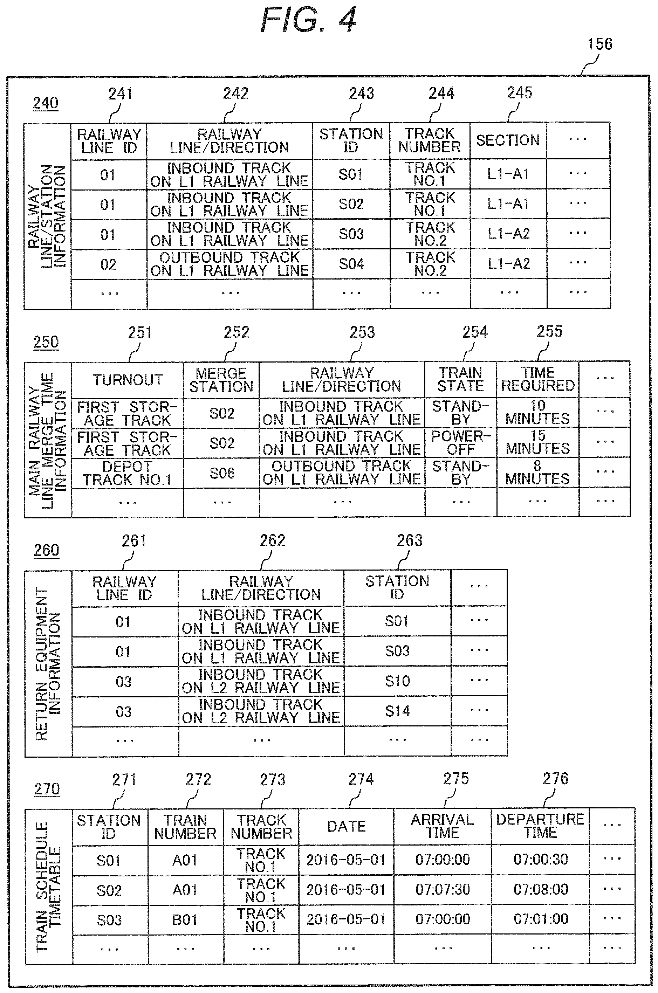

Figure 4 is a diagram showing a data structure of the master information 156 stored in the data server 111. The master information 156 includes railway line information of the railway to which the system is applied and schedule information.

Railway line/station information 240 includes information of railway line IDs 241, names 242 of railway lines/directions, station IDs 243, track number information 244 of stations, section information 245, and the like and indicates structures of railway lines. In this example, a railway line ID "01" indicates an "inbound track 901 on an L1 railway line" and a railway line ID "02" indicates an "outbound track 902 on the L1 railway line". It is implied that a station S01 belongs to a section L1-A1 and that the inbound track on the L1 railway line is track No. 1 of the station S01. Stations forming a railway line are basically stored in the order of the actual arrangement.

Main railway line merge time information 250 includes turnout information 251, merge stations 252, names 253 of railway lines/directions, train states 254, time 255 required until merge, and the like. For example, it is implied that a first storage track 906 merges with the inbound track 901 on the L1 railway line at a station S02 and that it takes 10 minutes for a train stored in a standby state to merge with the inbound track on the L1 railway line. Alternatively, it is implied that it takes 8 minutes for a train stored in a standby state on track No. 1 of a depot (railyard) 907 to merge with outbound track 902 on the L1 railway line at a station S06. These are information necessary when a train is additionally operated.

Return equipment information 260 includes information of railway line IDs 261, names 262 of railway lines/directions, station IDs 263, and the like. For the inbound track on the L1 railway line, return equipment 908 and 909 is installed at stations S01 and S03. The return equipment is configured to introduce a train on an inbound track (outbound track) to an outbound track (inbound track). As descried later, in the example, congestion states are analyzed by dividing a railway line into some sections (refer to section information 245 of railway line/station information 240). The sections are set by the system operator. Return sections can be set to sections based on the return equipment information 260. This is due to the fact that a station at which return equipment is not installed is not a point at which the number of trains to be operated is increased or reduced. The aforementioned information is fixed information. However, when facility information of a railway line or station is changed, the sections are updated by the system operator.

A train schedule timetable 270 includes information of station IDs 271, train numbers 272, track number information 273, dates 274, train arrival time 275, train departure time 276, and the like. For example, according to a train operation schedule on May 1, 2016, it is implied that a train A01 arrives at track No. 1 of the station S01 at 7 o'clock, departs at 7 o'clock 30 seconds, arrives at track No. 1 of the station S02 at 7 o'clock 7 minutes 30 seconds, and departs at 7 o'clock 8 minutes. The train schedule timetable 270 is updated every time data is received from the schedule planning system 131 of the train operations system 130.

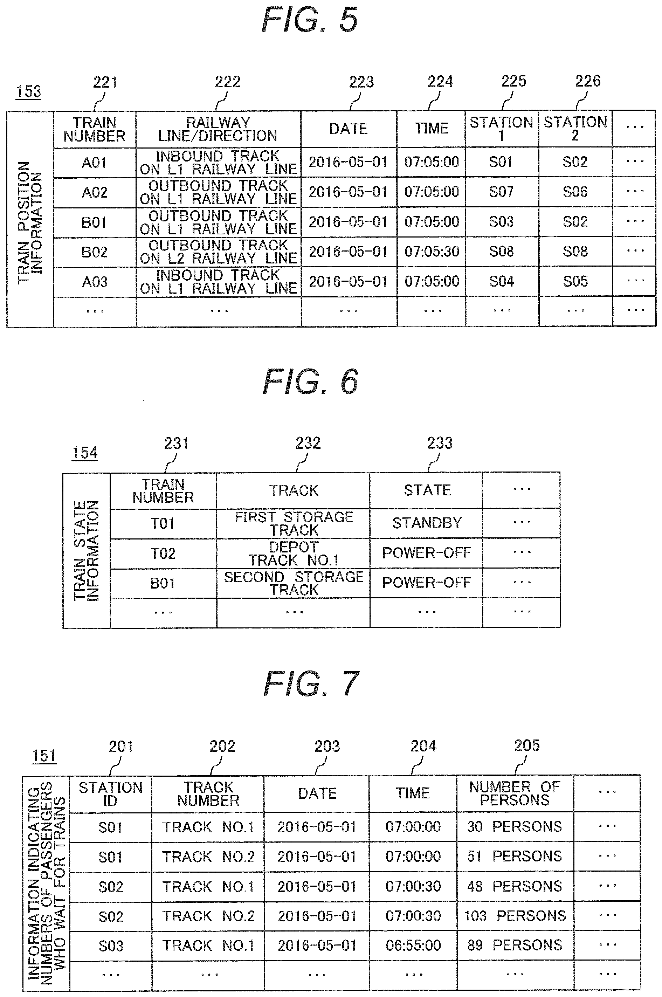

Figure 5 is a diagram showing a data structure of the train position information 153 stored in the data server 111. The train position information 153 includes information of train numbers 221, names 222 of railway lines/directions, dates 223, time 224, station information 225 and 226 during traveling, and the like. The train position information indicates the positions of trains at concerned time. The train position information is acquired by receiving information of the trains from the operation management system 132 or the train information management system 133. When a train is traveling, station IDs of stations between which the traveling train exists are registered in Station 1 and Station **2.** When the train is stopped, a station ID of a station at which the train is stopped is registered in Station 1 and Station **2.** Since it is sufficient if information indicating positions at which trains travel is included, a record structure is not limited to a structure shown in Figure **5****.**

Figure 6 is a diagram showing a data structure of the train state information 154 stored in the data server 111. The train state information 154 includes information of train numbers 231, tracks 232, train states 233, and the like. For example, it is implied that a train T01 is positioned on a first storage track 906 in a standby state. Tracks on which trains are positioned and the states of the trains are recognized by a track monitoring function of the operation management system 132 or train information management system 133 of the train operations system 130.

Figure 7 is a diagram showing a data structure of the information 151 stored in the data server 111 and indicating the numbers of passengers who wait for trains. The information 151 indicating the numbers of passengers who wait for trains includes information of station IDs 201, track number information 202, dates 203, time 204, the numbers 205 of waiting passengers, and the like. As each of the numbers of waiting passengers, a value obtained by counting the number of waiting passengers at predetermined time intervals of 1 minute, 5 minutes, 10 minutes, or the like is stored. The numbers of waiting passengers are estimated using information from equipment installed in station yards.

For this estimation, information of connections to the access points 105 of the public wireless LAN can be used, for example. When an access point is installed at each of platforms, the number of connections to the access points is calculated. When multiple access points are installed at each platform, a counted value of the number of connections is calculated. When two tracks are arranged opposite to each other with respect to a single platform, the number of connections is decomposed for each of the tracks. For the decomposition, the position of each terminal on the platform may be estimated using communication intensities from multiple access points, or the number of persons staying for each of tracks may be roughly detected using a video image captured by the monitoring camera 104. In addition, since not all passengers using stations use the public wireless LAN, the ratio of the number of users using the public wireless LAN to the number of all passengers is calculated and corrected. The ratio may be set by conducting a questionnaire survey or may be determined by comparing the number of passengers who passed through each automatic ticket gate 103 within a predetermined time period to the number, estimated from passengers' movements acquired by chronologically tracking access points to which mobile terminals are connected, of passengers who passed through the automatic ticket gate 103.

In addition, person detection may be executed by image processing using a video image captured by the monitoring camera 104 installed in a station yard and the number of waiting passengers may be calculated by counting the number of passengers waiting for trains for each of tracks. Alternatively, generation may be executed by a method of estimating a railway line and a train that might be used by each passenger from entrance and exit station information indicating the passenger using ticket gate pass-through data acquired from the automatic ticket gates 103 and of counting the number of passengers for each station and each track. A route to be used, a train to be used, a time period for waiting for a train at a station, and a total time period required to arrive at a station can be calculated for a combination of an arbitrary departure station and an arbitrary arrival station by solving a route search problem using network information of railway lines and stations and schedule data of trains. By counting results of executing this computation process on movements of all passengers for each station and each track, the number of passengers who wait for a train on an arbitrary track at an arbitrary station can be calculated. It is effective to combine and use these methods for a railway line for which a station at which a monitoring camera is installed and a station at which a monitoring camera is not installed exist. A measuring means such as an infrared sensor may be used, as well as the aforementioned methods.

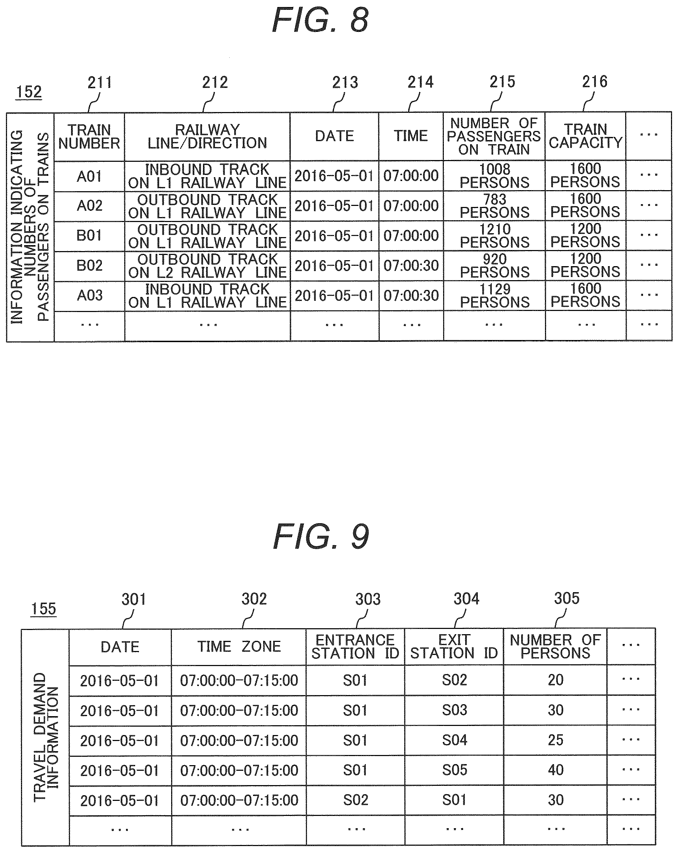

Figure 8 is a diagram showing a data structure of the information 152 stored in the data server 111 and indicating the numbers of passengers on trains. The information 152 indicating the numbers of passengers on trains includes information of train numbers 211, names 212 of railway lines/directions, dates 213, time 214, the numbers 215 of passengers on trains, train capacities 216, and the like. As described above, the numbers 215 of passengers on trains can be estimated using values of weight sensors attached to trains. Alternatively, measuring means such as cameras or infrared sensors may be attached near doors of trains and may count and calculate the numbers of passengers who get on and off the trains. Alternatively, when an access point of the public wireless LAN is installed in a train, the number of passengers may be calculated in the same manner as the estimation of the number of passengers who wait for a train and stay on a platform of a station, or routes and trains used by all passengers may be estimated and counted using the ticket gate pass-through data in the same manner as the aforementioned estimation of the number of passengers waiting for a train. Figure 9 is a diagram showing a data structure of the travel demand information 155 stored in the data server 111. A travel demand is defined as the number of persons who enter a station α to move to a station β as a destination in a time zone on a predetermined day. The travel demand information 155 includes information of dates 301, time zones 302, entrance station IDs 303, exit station IDs 304, the numbers 305 of persons, and the like. The time zones are stored based on set time intervals of 10 minutes, 15 minutes, 30 minutes, or the like. It is desirable that combinations of entrance and exit stations be included for all stations for each of railway lines. Combinations of entrance and exit stations, however, may be included for main stations (selected so that at least one station in each section is included) for each of railway lines. The travel demand information 155 is calculated by using the ticket gate pass-through data to count the numbers of users who entered a station A in a certain predetermined time zone and got off trains at stations. The figure indicates that, among passengers who entered the station S01 in a time zone from 7 o'clock to 7 o'clock 15 minutes, the number of passengers who exited from the station S02 is 20 and the number of passengers who exited from the station S03 is 30. The travel demand information 155 may be automatically updated at predetermined time intervals (of, for example, several seconds, several minutes, or the like) or may be updated when the data server 111 newly receives the ticket gate pass-through data.

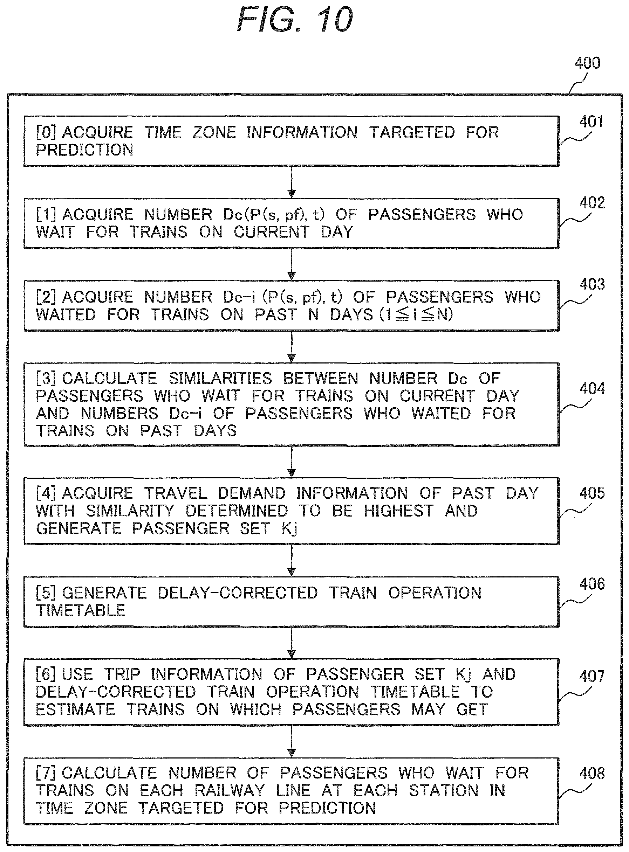

Figure 10 is a flowchart of the travel demand prediction program 400. The travel demand prediction program 400 estimates, based on data continuously accumulated in the data server 111, stations in which passengers may enter on a current day and time when the passengers may enter the stations, thereby estimating chronological changes in the numbers of passengers who wait for trains on the current day for each track. Rough increasing and decreasing trends in the numbers of passengers who wait for trains may be estimated without using past data. The numbers of passengers vary due to weather and surrounding traffic situations. The numbers of passengers who wait for trains are estimated with high accuracy based on not only causal relationships, such as commuting time to work and school, affecting increases and reductions in the numbers of passengers but also variations in the number of passengers due to irregular events. Thus, in the example, the numbers of passengers who wait for trains are predicted by using daily travel demand information highly similar to past data to simulate the numbers of passengers who get on trains.

The travel demand prediction program 400 is automatically executed at predetermined time intervals of 5 minutes, 10 minutes, 30 minutes, or the like. Since it is considered that travel demands are affected by time zones, time intervals that vary depending on time zones may be set. First, a time zone targeted for prediction is acquired (in step 401). The time zone targeted for the prediction may be set using a predetermined fixed value such as 15 minutes after the current time, 30 minutes after the current time, 1 hour after the current time, or the like or may be arbitrarily set in each case.

Next, dates and time information are referenced from the information 151 indicating the numbers of passengers who wait for trains, and data during a time period from (the current time - T) of the current day to the current time is acquired (in step 402). As the parameter **T, a** predetermined value such as 15 minutes, 30 minutes, or 1 hour is used. Next, the dates and the time information are referenced from the information 151 indicating the numbers of passengers who wait for trains, and data during a time period from (the current time - T) of past days to the current time is acquired (in step 403). As the parameter T, the same value as that used in step 402 is used. The past days are from N days before the current day to 1 day before the current day. As the parameter N, a predetermined value is used. A larger value of the parameter N is more desirable (or indicates a longer time period).

In step S402, a data group D_{c}(P(s, pf), t) is acquired from the information 151 indicating the numbers of passengers who wait for trains. In this case, Dc indicates the number of waiting persons at a place P identified by a track number pf and a station s at time t on the current day c. In this case, t is time from (the current time - T) to the current time. In addition, when the station and the track number are the station S01 and track No. 1, P(S01, 1) is expressed. Similarly, a data group (D_{c-i}(P(s, pf), t) (however, 1 ≤ i ≤ N) is acquired by step 403.

Similarities between the data group D_{c}(P(s, pf), t)) of the current day and the data group (D_{c-i}(P(s, pf), t) (however, 1 ≤ i ≤ N)) of the past days are calculated (in step 404). In the calculation of the similarities, Euclidian distances between D_{c} and D_{c-i} or the like may be used, for example. A past day determined to be the most similar (short distance in the case of the calculation of Euclidian distances) is identified and data of the past day identified from the travel demand information 155 is acquired (in step 405). In the selection of a past day with a high similarity, a single day may be selected or multiple days may be selected in the order from the highest similarity and an average value may be acquired.

In addition, in the acquisition of the travel demand information, data of all time zones may be acquired or data may be limited to data on a time period from predetermined time before the current time to the end of that day. A passenger who entered the station α before the time zone targeted for the prediction may exit from the station β in the time zone targeted for the prediction or get on or off a train on a railway line. Data on predetermined time before the current time is acquired to analyze passengers including such a passenger.

Trip information of passengers is generated from the acquired travel demand information. For example, when travel demand information on May 1, 2016 that is shown in Figure 9 is identified as a past day with the highest similarity, the passenger set Kj (entrance time, an entrance station ID, and an exit station ID) is generated as, for example, K1(07:00, S01, S02), K1(07:01, S01, S02), ··· K20(07:14, S01, S02), K21(07:00, S01, S03), K22(07:00, S01, S03), K23(07:01, S01, S03), K24(07:01, S01, S03), ···. Specifically, a passenger set K, which indicates passengers who enter the station α (entrance station) at predetermined entrance time to move to the station β (exit station) as a destination, is generated. A passenger set K is generated based on the stored travel demand information for combinations of entrance stations and exit stations for all stations included in a railway line or for combinations of entrance stations and exit stations for main stations. In the aforementioned example, since a combination is registered for each time zone in the travel demand information 155, the entrance time is calculated in the generation of the passenger set K on the assumption that almost equal numbers of passengers entered in the time zone.

A delay-corrected operation timetable for trains on the current day is generated using the train position information 153 and the train schedule timetable 270 (in step 406). The delay of a train at the current time can be calculated by crosschecking the train position information 153 and the train schedule timetable 270 at the current time. The calculated delay is reflected and the delay-corrected operation timetable for a time period from the current time to the end of the current day is generated.

After that, trains on which passengers may get are estimated using the trip information of the passenger set K generated in step 405 and the delay-corrected operation timetable generated in step 406 (in step 407). The travel demand information 155 is defined between the entrance station IDs 303 and the exit station IDs 304. When multiple railway lines exist between an entrance station and an exit station, a railway line and a train that are likely to be used can be calculated by searching for a route using the railway line/station information 240 included in the master information 156 and the train schedule timetable 270. For example, a route that causes a time period for a movement to be shortest is searched for. By this process, the following trip information can be output for all records of the passenger set K generated in step 405.

Kj(entrance time, an entrance station ID, an exit station ID, [T1, an alighting station ID, T2]m) T1: time when a train arrives at a station from which the train departs, T2: time when the train arrives at a station at which a person gets off the train.

When the person does not change the train, the departure station = an entrance station, and the alighting station = an exit station. When the person changes a train a number m of times, trip information including a number m of repetitions of the information in the square brackets is output. For example, when a passenger K₁₀₀ entered the station S01 and exited from a station S08, K₁₀₀ = (07:00, S01, S08, [07:05, S05, 07:30] [07:45, S08, 07:50]). Specifically, the passenger K₁₀₀ enters the station S01, gets on a train (inbound train on the L1 railway line) arriving at the entrance station or the departure station S01 at 7 o'clock 5 minutes, arrives at the station S05 at 7 o'clock 30 minutes, and gets off the train. After that, the passenger K₁₀₀ gets on a train (outbound train on an L2 railway line) arriving at the station S05 at 7 o'clock 45 minutes and arrives at the alighting and exit station S08 at 7 o'clock 50 minutes. It is apparent from this trip information that the passenger K₁₀₀ waits for the train on a platform of track No. 1 at the entrance station S01 during a time period from 7 o'clock to 7 o'clock 5 minutes and waits for the train on a platform of track No. 4 at the station S05 during a time period from 7 o'clock 30 minutes to 7 o'clock 45 minutes.

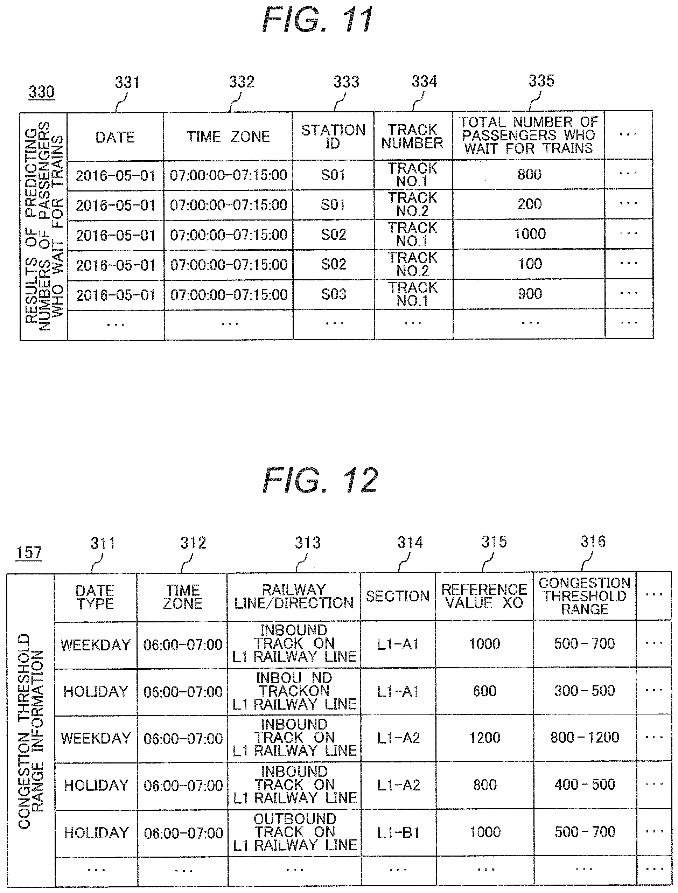

Based on the trip information of the passenger set **K,** a station and a track number where each passenger needs to wait for a train can be recognized. By counting the results, predicted values of the numbers of passengers who wait for trains for each of track numbers of each of stations in the time zone targeted for the prediction are calculated (in step 408). Figure 11 is a diagram showing a data structure of results 330 of predicting the numbers of passengers who wait for trains in the aforementioned manner. The results 330 of predicting the numbers of passengers who wait for trains are stored in the computing server 112. The results 330 of predicting the numbers of passengers who wait for trains include information of a date 331, a time zone 332, station IDs 333, track number information 334, the numbers 335 of passengers who wait for trains, and the like. For example, it is implied that 800 passengers in total wait for trains on track No. 1 at the station S01 in a time zone from 7 o'clock to 7 o'clock 15 minutes. The aforementioned passenger K₁₀₀ is included as a single person in the 800 passengers. Information of time zones is stored, while each of the time zones is a predetermined time unit such as 15 minutes, 30 minutes, or 1 hour.

As a result of the prediction of the numbers of passengers who wait for trains in the aforementioned manner, increases and reductions in the numbers of trains to be operated are determined using information of passengers on trains and the like. Specifically, when a predicted value of the number of passengers who wait for trains in a certain section is determined to be significantly larger than a reference value, a train is additionally operated. When a predicted value of the number of passengers who wait for trains is determined to be significantly smaller than the reference value, a train is canceled. A section L1-A2 shown in Figure 3 is described using an example of the case where an increase or reduction in the number of trains to be operated is determined. First, a total number ΣK of passengers who wait for trains at stations from a departure station (station S01 in this case) of a railway line to a station (station S03 in this case) previous to a terminal station of the target section L1-A2 is calculated. Specifically, the sum of a predicted number of passengers who wait for trains on a platform of track No. 1 at the station S01 in the time zone, a predicted number of passengers who wait for trains on a platform of track No. 1 at the station S02 in the time zone, and a predicted number of passengers who wait for trains on a platform of track No. 2 at the station S03 in the time zone is calculated. Passengers who wait for trains on a platform of track No. 1 at the terminal station (station S04 in this case) need to be counted as the number of persons who wait for a train in the next section L1-A3, and thus are not included in this case. The total number ΣK of passengers who wait for trains is counted by the program 420 for predicting the numbers of passengers who wait for trains using the results (Figure 11) of predicting the numbers of passengers who wait for trains by the travel demand prediction program 400. A list of railway lines and sections targeted for the counting may be a list of all railway lines and all sections or may be a list of railway lines specified by the system operator or may be a list of only sections specified by the system operator.

An increase or reduction in the number of trains to be operated is determined using the total number ΣK of passengers who wait for trains and a preset reference value **XO.** For example, the reference value XO is a normal value of the total number ΣK of passengers who wait for trains and **is,** for example, an average value of the numbers of passengers who waited for trains in the past. In order to prevent the increase or reduction from being inappropriately determined due to changes in the numbers of passengers during a middle or long time period, the increase or reduction in the number of trains to be operated is determined using a difference from the reference value.

Specifically, when "(the total number ΣK of passengers who wait for trains - the reference value XO) > an upper limit of a congestion threshold range" is established, the number of trains to be operated is determined to be increased. On the other hand, when "(the reference value XO - the total number ΣK of passengers who wait for trains) > a lower limit of the congestion threshold range" is established, the number of trains to be operated is determined to be reduced (cancellation). When both inequalities are not established, any train is not additionally operated and any train is not canceled.

Figure 12 is a diagram showing a data structure of the congestion threshold range information 157 stored in the data server 111. The congestion threshold range information 157 includes information of date types 311, time zones 312, names 313 of railway lines/directions, sections 314, reference values 315, congestion threshold ranges 316, and the like. Information of time zones is stored, while each of the time zones is a predetermined time unit such as 15 minutes, 30 minutes, or 1 hour. Since upper and lower limit values are included in the congestion threshold range information, there are three options, which are addition, cancellation, and maintenance. The upper limits and the lower limits may be stored in different columns or combinations of ratios of a predetermined threshold and allowable ranges (±α) may be stored. Since trends of passengers' demands vary depending on weekdays and holidays, time zones, railway lines, and sections in general, it is desirable that the congestion threshold range information be set for each section. Each of the congestion threshold ranges can be calculated by a statistical process of executing counting for each section and calculating an average value, dispersion, or the like using data stored in the information 151 indicating the numbers of passengers who wait for trains.

In addition, by periodically recalculating the reference values 315 (XO) at time intervals of several months, one year, or the like and updating the reference values 315 (XO), the reference value 315 (XO) can be supported against seasonal variations in passengers' demands and changes over years. When it is expected that passengers' demands will largely change compared with a normal state due to a large event, the system operator may input a reference value XO for a day on which the event is held.

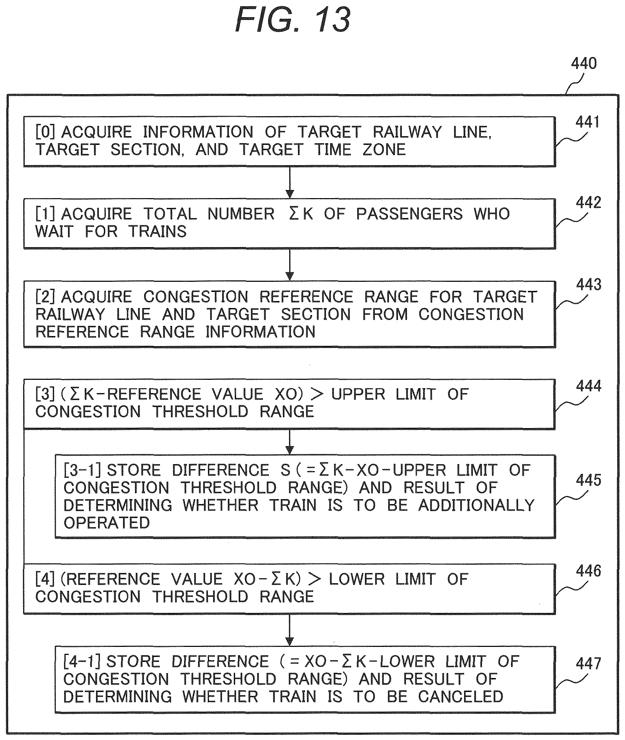

Figure 13 is a flowchart of the program 440 for determining an increase or reduction in the number of trains to be operated. First, a requirement for determining an increase or reduction in the number of trains to be operated for a target railway line, a target section, and a target time zone is acquired (in step 441). The total number ΣK, calculated by the program 420 for predicting the number of passengers waiting for a train, of passengers who wait for trains is acquired based on the acquired requirement (in step 442). Next, a reference value 315 and a congestion threshold range 316 that match the requirement acquired in step 441 are acquired from the congestion threshold range information 157 (in step 443).

As described above, in order to reduce an effect of changes over years, the difference between the total number ΣK of passengers who wait for trains and the reference value XO is compared with the congestion threshold range. When "(the total number ΣK of passengers who wait for trains) - the reference value XO) > an upper limit of the congestion threshold range" is established, it is determined that a train is to be additionally operated in step 444, and a difference S (the total number ΣK of passengers who wait for trains) - the reference value XO - the upper limit of the congestion threshold range) is calculated and stored together with the result of determining an increase or reduction in the number of trains to be operated (in step 445). On the other hand, when "(the reference value XO - the total number ΣK of passengers waiting for trains) > an lower limit of the congestion threshold range" is established, it is determined that a train needs to be canceled (in step 446), and a difference S (the reference value XO - the total number ΣK of passengers waiting for trains - the lower limit of the congestion threshold range) is calculated and stored together with the result of determining an increase or reduction in the number of trains to be operated (in step 447). Specifically, it can be said that the difference S indicates that the total number ΣK of passengers who wait for trains is larger than an expected congestion degree (given as the upper limit of the congestion threshold range) or smaller than an emptiness degree (given as the lower limit of the congestion threshold range).

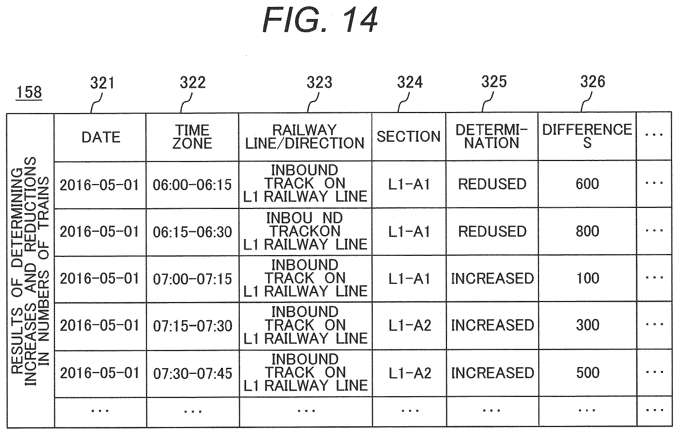

Figure 14 is a diagram showing a data structure of the results 158, stored in the data server 111, of determining increases and reductions in the numbers of trains to be operated. The results 158 of determining increases and reductions in the numbers of trains to be operated include information of dates 321, time zones 322, names 323 of railway lines/directions, sections 324, determination results 325 acquired from the program 440 for determining an increase or reduction in the number of trains to be operated, differences 326, and the like.

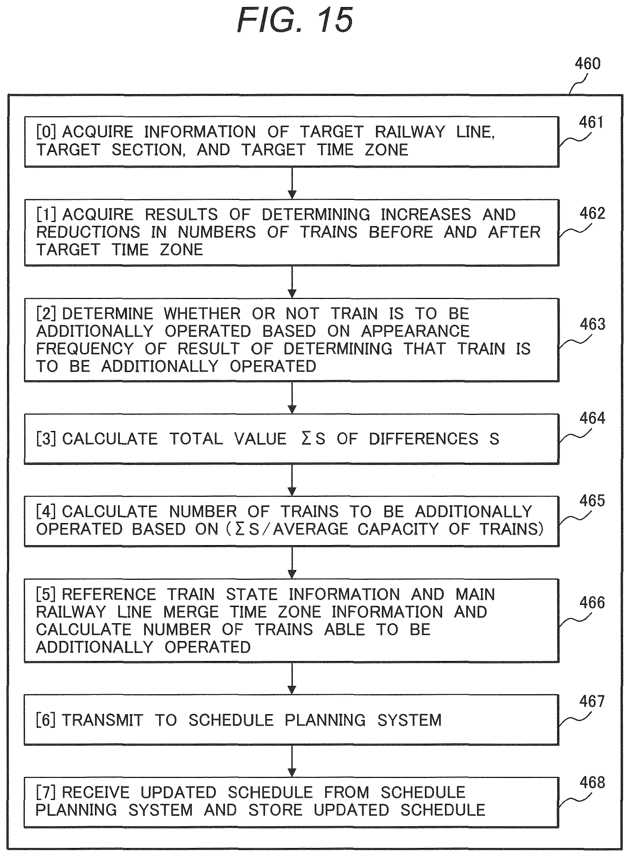

Figure 15 is a flowchart of a process of calculating, based on the results 158 of determining increases and reductions in the numbers of trains to be operated and the train state information 154, the number of trains to be additionally operated or canceled, transmitting information to the schedule planning system 131 of the train operations system 130 owned by the railway operator, and receiving an updated schedule generated by the schedule planning system 131. The case where the number of trains to be operated is increased is described as an example. First, a requirement for a target railway line, a target section, and a target time zone is acquired (in step 461). Results of determination made under the acquired requirement are acquired from the results 158 of determining increases and reductions in the numbers of trains to be operated (in step 462). In this case, records of time zones preceding and succeeding the target time zone are also acquired. For example, when the target time zone specified in step 461 is from 7:00 to 7:15, multiple records from 6:30 to 7:45 or the like are acquired so that margins of 30 minutes before and after the target time zone are acquired in step 462. It is assumed that the margins are defined as 30 minutes before and after the target time zone, 1 hour before and after the target time zone, or the like in advance. When the margins of 30 minutes before and after the target time zone are acquired, and each of time zones indicated in the results 158 of determining increases and reductions in the numbers of trains to be operated is 15 minutes, five records including a record of the target time zone are acquired in total in step 462. Results of determining the acquired records are referenced. When the number of times that it is determined that a train is to be additionally operated exceeds a predetermined threshold, it is finally determined that a train is to be additionally operated (in step 463). The threshold may be determined as a ratio (of, for example, higher than 50%) to the total number of records. When the number of times exceeds the threshold, steps 464 and later are executed. When the number of times does not exceed the threshold, the process returns to step 461 to acquire a requirement for a different target railway line, a different target section, and a different target time zone.

When it is determined that a train is to be additionally operated, a total value ΣS of differences S of the results 158 of determining increases and reductions in the numbers of trains to be operated is calculated for all the records acquired in step 462 (in step 464) in order to calculate the number of trains to be additionally operated, and the number of trains to be additionally operated is calculated based on (ΣS / (average train capacity information) (in step 465). The average train capacity information can be calculated from the train schedule timetable 270 included in the master information 156. As another method of calculating the number of trains to be additionally operated, there is a method of setting the number of trains to be additionally operated to 1, 2, or 3 based on a total value of the numbers of passengers who wait for trains.

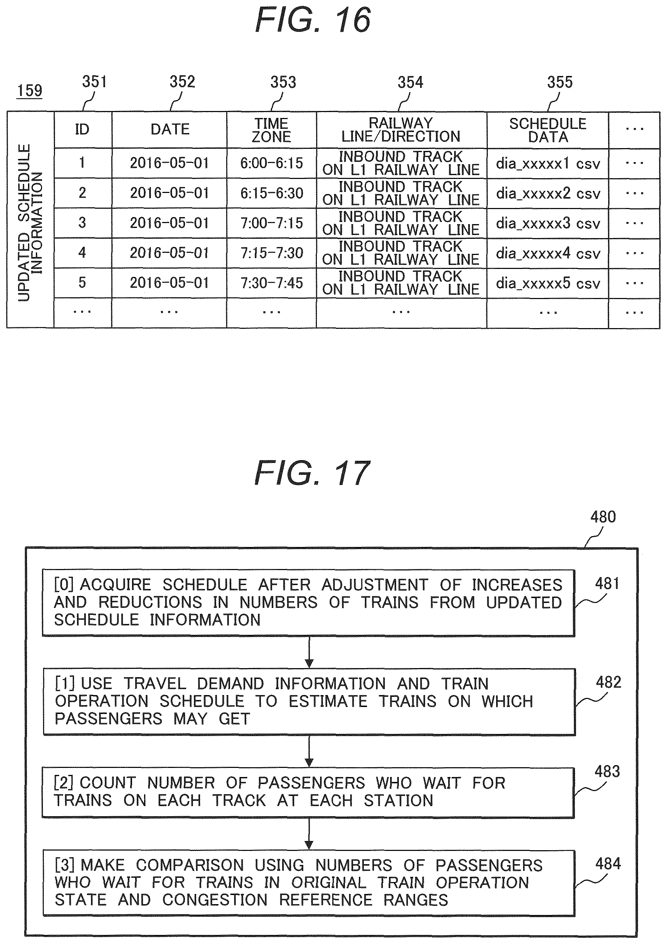

Next, in order to confirm whether trains can be assigned for the number, calculated in step 465, of trains to be additionally operated, the train state information 154 and the main railway line merge time information 250 of the master information 156 are referenced (in step 466). Specifically, the main railway line merge time information 250 included in the master information 156 is referenced based on the track information of the train state information 154, and an assignable train is introduced to the target railway line. When the number of assignable trains exceeds the number, calculated in step 465, of trains to be additionally operated, time required for merge is acquired together with the number, calculated in step 465, of trains to be additionally operated from the main railway line merge time information 250 and is transmitted to the schedule planning system 131 of the train operations system 130 (in step 467). When the number of assignable trains is smaller than the number, calculated in step 465, of trains to be additionally operated, information indicating the number of assignable trains is transmitted to the schedule planning system 131. Lastly, an updated schedule generated by the schedule planning system 131 is received and stored in the updated schedule information 159 included in the data server 111 (in step 468). The updated schedule is timetable information on a range of several tens of minutes to several hours before the target time zone to several tens of minutes to several hours after the target time zone. Figure 16 is a diagram showing a data structure of the updated schedule information 159 stored in the data server 111. The updated schedule information 159 includes information of IDs 351, dates 352, time zones 353, names 354 of railway lines/directions, storage location information 355 of schedule data files, and the like. Information is stored in the updated schedule information 159 when the schedule proposal generation program 460 is executed and an updated schedule is newly received from the schedule planning system 131. In the dynamic train operation schedule proposal system 110 shown in Figure **1****,** the number of trains able to be additionally operated is calculated by the schedule proposal generation program 460 and is proposed to the schedule planning system 131. For example, an increase or reduction in the number of trains to be operated may be determined by the program 440 for determining an increase or reduction in the number of trains to be operated, and the result of the determination may be given as a proposal of changing the schedule to the schedule planning system 131. A process to be executed by the dynamic train operation schedule proposal system 110 and a process to be executed by the train operations system 130 depend on the division of roles. In this case, a process to be executed by the schedule proposal generation program 460 is executed by the schedule planning system 131.

Figure 17 is a flowchart of the analysis, to be executed by the effect analysis program 480, of an effect of an updated schedule changed in accordance with a proposal of the operation schedule proposal system according to the example. First, a schedule after the adjustment of increases and reductions in the numbers of trains to be operated is acquired from the updated schedule information 159 (in step 481). Travel demand information for a time zone of the updated schedule is generated in the same manner as the process of the travel demand prediction program 400 and trains on which passengers may get are estimated based on the schedule information acquired in step 481 (in step 482). The number of passengers who wait for trains on a platform of each track number at each station is counted using the results of the estimation (in step 483). The numbers of passengers who wait for trains after the update of the schedule are compared with the congestion threshold range information 157 and the information 151 indicating the numbers of passengers who wait for trains based on the schedule (original train operation state) before the adjustment of increases and reductions in the numbers of trains to be operated. Whether or not the numbers of passengers who wait for trains after the update of the schedule are in set congestion threshold ranges or are closer to the congestion threshold ranges compared with the original state is determined (in step 484). When a state in which the number of passengers who wait for trains is out of a set congestion threshold range is confirmed regardless of the execution of the update of the schedule, measures are taken for improvement by adjusting a parameter of the program 440 for determining an increase or reduction in the number of trains to be operated or a parameter of the schedule proposal generation program 460.

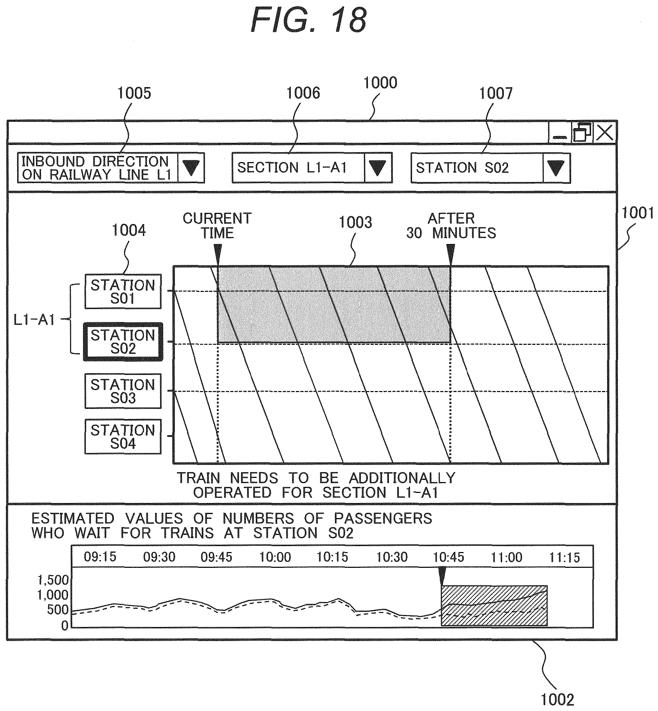

Figure 18 is a diagram showing an example of a screen distributed by the information distributing server 113. A screen 1000 is to be distributed to the terminal 122 of the system operator 121 and the operation management center 126. The screen 1000 displays the numbers of passengers currently waiting for trains, a train schedule timetable, and the like. The screen 1000 includes a screen 1001 on which diagonals are displayed and a graph display region 1002 on which information indicating the numbers of passengers who wait for trains at a certain station is chronologically displayed. In a diagonal display region 1003, diagonals are displayed in a two-dimensional region formed by a list 1004 of stations and a time axis in a time zone, for example, from the current time to several minutes after the current time. In a chronological graph included in the graph display region 1002, the numbers of passengers who wait for trains in a time period from the departure of an initial train on the current day or from several hours before the current time to several hours after the current time are displayed. Each of the diagonal display region 1003 and the graph display region 1002 may have a scrolling function in vertical and horizontal directions. In addition, the screen 1000 may have a function 1005 of selecting a railway line and a direction, a function 1006 of selecting a section, and a function 1007 of a station. A railway line displayed on the screen 1001 is changed based on details selected by the function 1005 of selecting a railway line and a direction. In addition, a list of the function 1006 of selecting a section and the function 1007 of selecting a station is changed based on the details selected by the function 1005 of selecting a railway line and a direction. Furthermore, a range (range of stations) displayed on the screen 1001 is changed based on a detail selected by the function 1006 of selecting a section. When the state of a railway line with a number of stations is to be recognized, these functions are effective. A target station in the graph display region of the screen 1002 is changed based on a detail selected by the function 1007 of selecting a station. A function of selecting a track number in a station may be included.

In the graph display region of the screen 1002, not only changes in the numbers of passengers who wait for trains but also reference values XO may be displayed. In this case, for example, it is considered that the numbers of passengers who wait for trains are displayed using a solid line and the reference values are displayed using a dotted line. When the number of passengers who wait for a train significantly exceed a threshold range, a concerned station may be surrounded by a frame, changed in color or size, or popped up so that an alert indicating that the station is more congested than expected is displayed to users. In addition, information indicating the numbers of passengers who wait for trains at stations may be displayed using texts. By presenting, to the system operator and the railway operator, a screen from which a current state can be seen, the need for the adjustment of an increase or reduction in the number of trains to be operated can be easily understood and information to be used to recognize the state can be obtained. These screens can be operated using an input interface such as a mouse or a keyboard. For example, a screen on which diagonals are displayed can be zoomed in and out using a wheel button, a station can be selected by clicking a mouse, and detailed information such as congestion information for each track number can be displayed.

When the information distributing server 113 receives requests input to the requirement setting functions 1005, 1006, and 1007, the information distributing server 113 extracts records of a concerned railway line, a concerned direction, a concerned section, and a concerned station in accordance with requirements from the train station information 153, the train schedule timetable 270, and the information 151 indicating the numbers of passengers who wait for trains. After that, the information distributing server 113 processes the extracted records into a format for mapping to the chronological graph and the diagonal screen and distributes the processed records to a device that has transmitted the requests.

The information distributing server 113 may use multiple programs based on characteristics of the device, which is a distribution destination, and details of information to be distributed, thereby generating a screen to be distributed. For example, a technique for a web server can be used for the distribution of the screen, and the distributed information can be seen using a web browser executed by the device, which is the distribution destination. A dedicated application executed in the device, which is the distribution destination, may generate a screen to be displayed using data transmitted by the information distributing server 113.

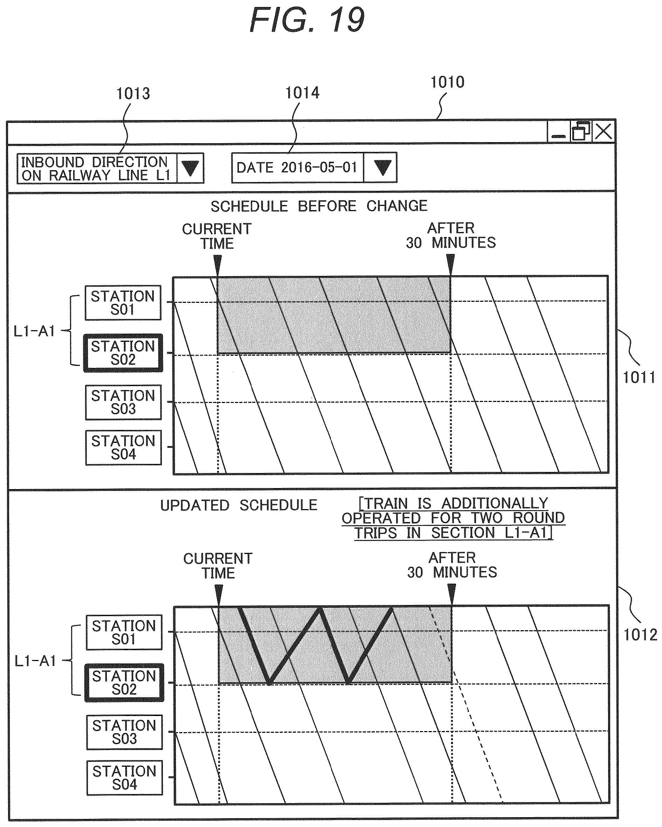

Figure 19 is a diagram showing another example of the screen to be distributed by the information distributing server 113. A screen 1010 displays diagonals and the like before and after the adjustment of increases and reductions in the numbers of trains to be operated. The screen 1010 is composed of a screen 1011 for displaying a schedule and the like before the adjustment of increases and reductions in the numbers of trains to be operated and a screen 1012 for displaying updated diagonals after the adjustment of increases and reductions in the numbers of trains to be operated. The screen 1010 may include a function 1013 of selecting a railway line and a direction, a function 1014 of selecting a date, and the like. A railway line displayed in the screens 1011 and 1012 is changed based on details selected by the function 1013 of selecting a railway line and a direction and a detail selected by the function 1014 of selecting a date. The screens 1011 and 1012 may be separated from each other and displayed side by side in a vertical direction of the screens or separated from each other and displayed side by side in a horizontal direction of the screens. The screens 1011 and 1012 may be displayed in different windows and freely scrolled by a user. Each of the screens 1011 and 1012 includes a diagonal display region and displays diagonals in a time period from the current time to several tens of minutes after the current time in a two-dimensional region formed by a list of sections and stations and a time axis. Each of the screens 1011 and 1012 may have a scrolling function in the vertical and horizontal directions. The scrolling functions of the screens 1011 and 1012 may be operated independently of each other. When one of the screen regions is scrolled, the other screen region may be scrolled in coordination with the scrolling of the one screen region. By the coordination, schedules before and after the adjustment of an increase or reduction in the number of trains to be operated can be compared with each other in the same display region. In addition, in order to easily identify an additionally operated train and a canceled train, the color, width, shape, or the like of a line displayed to indicate the additionally operated train may be changed in the proposed diagonal display screen 1012 and the color, width, shape, or the like of a line displayed to indicate the canceled train may be changed in the proposed diagonal display screen 1012. The additionally operated train may be indicated by a solid line, while the canceled train may be indicated by a dotted line. Figure 19 shows an example in which a train is additionally operated to make two round trips in the section L1-A1 and a single train to be operated in the entire section is canceled. In order to clearly display a section and time zone in which an increase or reduction in the number of trains to be operated is adjusted, not only a diagonal but also background colors of the concerned section and time zone may be changed.

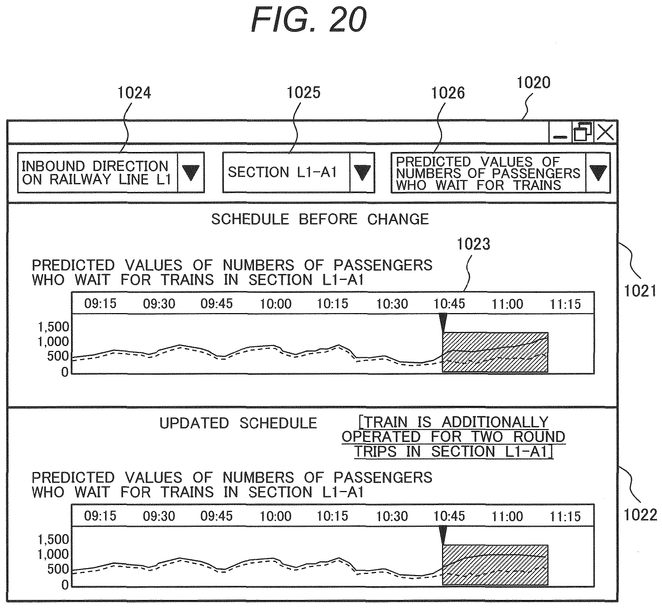

Figure 20 is a diagram showing another example of the screen to be distributed by the information distributing server 113. A screen 1020 displays a comparison screen for displaying the numbers of passengers who wait for trains before and after the adjustment of an increase or reduction in the number of trains to be operated. The screen 1020 is composed of a screen 1021 for displaying predicted values of the numbers of passengers who wait for trains before the adjustment of an increase or reduction in the number of trains to be operated and a screen 1022 for displaying predicted values of the numbers of passengers who wait for trains after the adjustment of an increase or reduction in the number of trains to be operated. The screens 1021 and 1022 may be separated from each other and displayed side by side in a vertical direction of the screens or may be separated from each other and displayed side by side in a horizontal direction of the screens. Alternatively, the screens 1021 and 1022 may be displayed in different windows and freely scrolled by a user. Each of the screens 1021 and 1022 includes a graph display region 1023. In a chronological graph included in each of the graph display regions 1023, the numbers of passengers who wait for trains in a time period from the departure of an initial train on the current day or from several hours before the current time to several hours after the current time are displayed. Each of the graph display regions may have a scrolling function and a zooming function in the horizontal direction. The screen 1020 may include a function 1024 of selecting a railway line and a direction, a function 1025 of selecting a section, and a function 1026 of selecting an index. A railway line displayed on the screen 1020 is changed based on details selected by the function 1024 of selecting a railway line and a direction. A candidate list selected by the function 1025 of selecting a section is changed based on the details selected by the function 1024 of selecting a railway line and a direction. The screen 1020 may include a function of selecting more detailed information such as a station and a track number as well as the function 1025 of selecting a section. In each of the graph display regions 1023, a change in an index is displayed in a chronological graph or the like based on details selected by the function 1024 of selecting a railway line and a direction, a detail selected by the function 1025 of selecting a section, and a detail selected by the function 1026 of selecting an index. The index may be selected by an interface capable of selecting a single candidate or by an interface capable of simultaneously selecting multiple indices. When the interface capable of simultaneously selecting multiple indices is used, graphs displayed in the graph display regions 1023 are converted into display formats in which data can be easily distinguished for each index by changing shapes or colors of lines for each index, and are distributed. It is considered that types of selectable indices are the number (measured value or predicted value) of passengers who wait for a train, a passenger capacity utilization rate, and the like, which are already stored in the data server 111 and can be counted from data such as the information 151 indicating the numbers of passengers who wait for trains and the information 152 indicating the numbers of passengers on trains.

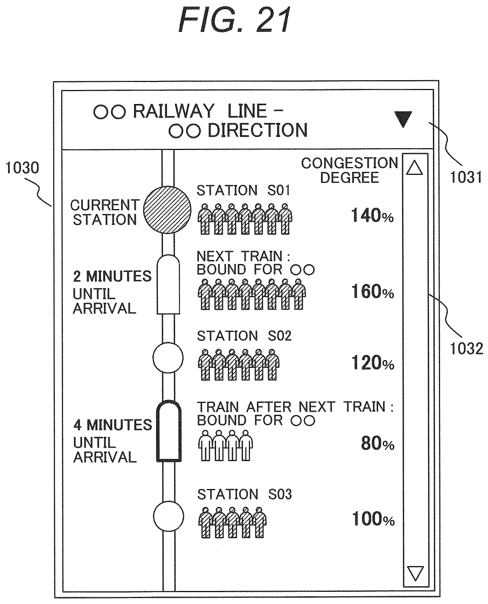

Figure 21 is a diagram showing another example of the screen to be distributed by the information distributing server 113. A screen 1030 is distributed to the terminal 128 of the passenger 127 and displays scheduled arrival time of a train headed in a specified direction on a specified railway line, a congestion state of a station, and a congestion state of the train. The screen needs to be configured based on the size of a small screen of the mobile terminal 128 of the passenger 127 and low resolution of the screen of the mobile terminal 128. For example, the screen 1030 includes an interface 1031 for selecting a railway line, a direction, and a station and an information display region 1032 having a scrolling function. Thus, a user can easily select a station and a train that are information that the user wants to see.

Information of a station close to a current position of the user may be selected and displayed in coordination with a GPS function of the terminal 128. The screen 1030 displays time required for a train to arrive at a station at which the user is staying and a congestion state of the station. A congestion degree of the train can be displayed using information indicating the number of passengers on the train. Thus, the user can determine whether to get on the next train or a train that will arrive after the next train. In addition, when a train is additionally operated, information of the additionally operated train is provided by changing the thickness, color, or the like of a line, and users know that a train operation has been adjusted based on passengers' demands. This is considered to lead to the improvement of satisfaction with the transportation service.

When predicted values of congestion degrees of stations are distributed and a passenger can use multiple stations, the passenger can select and use an uncrowded station and this leads to dispersion of congestion. Transportation operators can ensure the safety at stations and the like by assigning or regulating personnel based on congestion degrees of stations and the like. Furthermore, congestion can be alleviated by assigning a number of transportation means (buses, taxis, and the like) to crowded bus stops, taxi stands, and the like.

### Reference Signs List

101: train, 110: dynamic train operation schedule proposal system, 111: data server, 112: computing server, 113: information distributing server, 126: operation management center, 130: train operations system, 131: schedule planning system, 132: operation management system, 133: train information management system, 400: travel demand prediction program, 420: program for predicting the numbers of passengers who wait trains, 440: program for determining increase or reduction in the number of trains to be operated, 460: schedule proposal generation program, 480: effect analysis program.

## Claims

1. A transportation system for operating trains (101) on a railway line with a plurality of stations, comprising:
one or more of: automatic ticket gates (103), monitoring cameras (104) installed at the plurality of stations, and wireless LANs installed at the plurality of stations for collecting information related to estimates of numbers of passengers entering and exiting the plurality of stations;
a schedule planning system (131) for determining a schedule for the railway line; and
a schedule proposal system (110) for proposing a change in the schedule for the railway line,
wherein the schedule proposal system (110) includes:
a data server (111) for storing the information collected at the plurality of stations and related to the numbers of passengers, and
a computing server (112) storing a travel demand prediction program (400), a program (420) for predicting the numbers of passengers who wait for trains (101) and a program (440) for determining an increase or reduction in the number of trains (101) to be operated,
wherein the data server (111) stores the number of passengers who enter a first station included in the plurality of stations in predetermined time zones in the past and exit from a second station included in the plurality of stations and different from the first station,
wherein the computing server (112) executes, at predetermined time intervals, the travel demand prediction program (400), the program (420) for predicting the numbers of passengers who wait for trains (101) and the program (440) for determining an increase or reduction in the number of trains (101) to be operated,
wherein the travel demand prediction program (400) predicts the number of passengers who enter the first station in the predetermined time zone on a current day and exit from the second station, based on the number of passengers who enter the first station in the predetermined time zone in the past and exit from the second station stored in the data server (111),
wherein the program (420) for predicting the numbers of passengers who wait for trains (101) predicts, based on the predicted number of passengers by the travel demand prediction program (400), the numbers of passengers who wait for trains (101) at the plurality of stations in the predetermined time zone on the current day,
wherein the program (440) for determining an increase or reduction in the number of trains (101) to be operated determines, based on comparing the predicted numbers of passengers who wait for trains at the plurality of stations in the predetermined time zone on the current day with a reference value (XO), whether or not the number of trains (101) to be operated in the predetermined time zone on the current day is to be increased or reduced, and
wherein the schedule planning system (131) updates a schedule for the predetermined time zone on the current day to a schedule in which the number of trains (101) to be operated has been increased or reduced based on the determination, made by the schedule proposal system (110), of whether or not the number of trains (101) to be operated is to be increased or reduced, whereby when a difference between the predicted number of passengers and the reference value (XO) is determined to be larger than an upper limit of a congestion threshold range, a train (101) is additionally operated, and when the difference between the predicted number of passengers and the reference value (XO) is determined to be smaller than a lower limit of the congestion threshold range, a train (101) is canceled.

2. The transportation system according to claim 1, further comprising:
a train information management system (133) for collecting information on the trains (101) operated on the railway line,
wherein the computing server (112) further stores a schedule proposal generation program (460) and executes the schedule proposal generation program (460) at predetermined time intervals,
wherein the schedule proposal generation program (460) generates a schedule proposal in which the number of trains (101) to be operated in the predetermined time zone on the current day has been increased or reduced, based on the result of the determination by the program (440) for determining an increase or reduction in the number of trains (101) to be operated, and the information, collected by the train information management system (133), of the trains (101), and
wherein the schedule planning system (131) updates the schedule based on the schedule proposal.

3. The transportation system according to claim 2,
wherein the computing server (112) stores an effect analysis program (480) for analyzing an effect of the schedule updated by the schedule planning system (131), and
wherein the effect analysis program (480) calculates the effect of the schedule updated by the schedule planning system (131) and adjusts, based on the effect, a parameter of the program (440) for determining an increase or reduction in the number of trains (101) to be operated or a parameter of the schedule proposal generation program (460).

4. The transportation system according to claim 3,
wherein the data server (111) stores a main railway line merge time information (250) including requiring time for a train (101) in a predetermined state to merge with a main railway from a predetermined turnout,
wherein a train state information (154) which shows track on which each train (101) is positioned and the state of each train (101) on the railway line is included in the information on the trains (101) operated on the railway line collected by the train information management system (133), and
wherein the schedule proposal generation program (460) generates the schedule proposal by introducing an assignable train to the railway line based on the main railway line merge time information (250) and the train state information (154).

5. A method for operating trains (101) on a railway line with a plurality of stations, the method comprising:
using one or more of: automatic ticket gates (103), monitoring cameras (104) installed at the plurality of stations, and wireless LANs installed at the plurality of stations to collect information related to estimates of numbers of passengers entering and exiting the plurality of stations;
providing a schedule planning system (131) for determining a schedule for the railway line;
providing a schedule proposal system (110) for proposing a change in the schedule for the railway line, the schedule proposal system (110) including: a data server (111) for storing the information collected at the plurality of stations and related to the numbers of passengers; and further including a computing server (112) storing a travel demand prediction program (400), a program (420) for predicting the numbers of passengers who wait for trains (101) and a program (440) for determining an increase or reduction in the number of trains (101) to be operated,
using the data server (111) to store the number of passengers who enter a first station included in the plurality of stations in predetermined time zones in the past and exit from a second station included in the plurality of stations and different from the first station;
using the computing server (112) to execute, at predetermined time intervals, the travel demand prediction program (400), the program (420) for predicting the numbers of passengers who wait for trains (101) and the program (440) for determining an increase or reduction in the number of trains (101) to be operated; and
using the travel demand prediction program (400) to predict the number of passengers who enter the first station in the predetermined time zone on a current day and exit from the second station, based on the number of passengers who enter the first station in the predetermined time zone in the past and exit from the second station stored in the data server (111);
using the program (420) for predicting the numbers of passengers who wait for trains (101) to predict, based on the predicted number of passengers by the travel demand prediction program, the numbers of passengers who wait for trains (101) at the plurality of stations in the predetermined time zone on the current day;
using the program (440) for determining an increase or reduction in the number of trains to be operated to determine, based on comparing the predicted numbers of passengers who wait for trains (101) at the plurality of stations in the predetermined time zone on the current day with a reference value (XO), whether or not the number of trains (101) to be operated in the predetermined time zone on the current day is to be increased or reduced;
using the schedule planning system (131) to update a schedule for the predetermined time zone on the current day to a schedule in which the number of trains (101) to be operated has been increased or reduced based on the determination, made by the schedule proposal system (110), of whether or not the number of trains (101) to be operated is to be increased or reduced; and
additionally operating a train (101) when a difference between the predicted number of passengers and the reference value (XO) is determined to be larger than an upper limit of a congestion threshold range, and cancelling a train (101) when the difference between the predicted number of passengers and the reference value (XO) is determined to be smaller than a lower limit of the congestion threshold range.

## Patentansprüche

1. Verkehrssystem zum Betreiben von Zügen (101) auf einer Gleisstrecke mit einer Vielzahl von Bahnhöfen, umfassend:
eines oder mehrere der Folgenden: automatische Fahrkartenschranken (103), Überwachungskameras (104), die an der Vielzahl von Bahnhöfen angebracht sind, und Drahtlos-LANs, die zum Sammeln von Informationen betreffend Schätzungen der Anzahl von Fahrgästen, die die Vielzahl von Bahnhöfen betreten und verlassen, an der Vielzahl von Bahnhöfen angebracht sind;
ein Fahrplan-Planungssystem (131) zum Bestimmen eines Fahrplans für die Gleisstrecke; und
ein Fahrplan-Vorschlagsystem (110) zum Vorschlagen einer Änderung des Fahrplans für die Gleisstrecke,
wobei das Fahrplan-Vorschlagsystem (110) Folgendes umfasst:
einen Datenserver (111) zum Speichern der Informationen, die an der Vielzahl von Bahnhöfen gesammelt werden und die Anzahl von Fahrgästen betreffen, und
einen Rechenserver (112), der ein Reisenachfragevorhersageprogramm (400), ein Programm (420) zur Vorhersage der Anzahl von Fahrgästen, die auf Züge (101) warten, und ein Programm (440) zum Bestimmen eines Anstiegs oder einer Reduktion der Anzahl von Zügen (101), die in Betrieb zu nehmen sind, speichert,
wobei der Datenserver (111) die Anzahl von Fahrgästen speichert, die einen ersten Bahnhof betreten, der in der Vielzahl von Bahnhöfen in vorbestimmten Zeitzonen in der Vergangenheit umfasst ist, und die einen zweiten Bahnhof verlassen, der in der Vielzahl von Bahnhöfen umfasst ist, und sich von dem ersten Bahnhof unterscheidet,
wobei der Rechenserver (112) zu vorbestimmten Zeitabständen das Reisenachfragevorhersageprogramm (400), das Programm (420) zur Vorhersage der Anzahl von Fahrgästen, die auf Züge (101) warten, und ein Programm (440) zum Bestimmen eines Anstiegs oder einer Reduktion der Anzahl von Zügen (101), die in Betrieb zu nehmen sind, ausführt,
wobei das Reisenachfragevorhersageprogramm (400) die Anzahl von Fahrgästen, die den ersten Bahnhof in der vorbestimmten Zeitzone an einem aktuellen Tag betreten und den zweiten Bahnhof verlassen, basierend auf der in dem Datenserver (111) gespeicherten Anzahl der Fahrgäste vorhersagt, die den ersten Bahnhof in der vorbestimmten Zeitzone in der Vergangenheit betreten und den zweiten Bahnhof verlassen haben,
wobei das Programm (420) zum Vorhersagen der Anzahl von Fahrgästen, die auf Züge (101) warten, basierend auf der vorhergesagten Anzahl von Fahrgästen durch das Reisenachfragevorhersageprogramm (400) die Anzahl von Fahrgästen, die auf Züge (101) an der Vielzahl von Bahnhöfen in der vorbestimmten Zeitzone am aktuellen Tag warten, vorhersagt,
wobei das Programm (440) zum Bestimmen eines Anstiegs oder einer Reduktion der Anzahl von Zügen (101), die in Betrieb zu nehmen sind, basierend auf dem Vergleich der vorhergesagten Anzahl von Fahrgästen, die an der Vielzahl von Bahnhöfen in der vorbestimmten Zeitzone an dem aktuellen Tag auf Züge warten, mit einem Referenzwert (XO), bestimmt, ob die Anzahl von Zügen (101), die in der vorbestimmten Zeitzone an dem aktuellen Tag in Betrieb zu nehmen sind, erhöht oder verringert werden soll, und
wobei das Fahrplan-Planungssystem (131) einen Fahrplan für die vorbestimmte Zeitzone an dem aktuellen Tag auf einen Fahrplan aktualisiert, in dem die Anzahl von Zügen (101), die in Betrieb zu nehmen sind, basierend auf der Bestimmung, die durch das Fahrplan-Vorschlagsystem (110) vorgenommen wurde, ob die Anzahl von Zügen (101), die in Betrieb zu nehmen sind, erhöht oder verringert werden soll, erhöht oder verringert wird, wodurch, wenn bestimmt wird, dass eine Differenz zwischen der vorhergesagten Anzahl von Fahrgästen und dem Referenzwert (XO) größer als eine Obergrenze eines Stauschwellenwertbereichs ist, ein Zug (101) zusätzlich in Betrieb genommen wird, und wenn bestimmt wird, dass die Differenz zwischen der vorhergesagten Anzahl von Fahrgästen und dem Referenzwert (XO) kleiner ist als eine Untergrenze des Stauschwellenwertbereichs, ein Zug (101) ausfallen gelassen wird.

2. Verkehrssystem nach Anspruch 1, das ferner Folgendes umfasst:
ein Zuginformationsverwaltungssystem (133) zum Sammeln von Informationen zu den Zügen (101), die auf der Gleisstrecke betrieben werden,
wobei der Rechenserver (112) ferner ein Fahrplanvorschlagerzeugungsprogramm (460) speichert und das Fahrplanvorschlagerzeugungsprogramm (460) in vorbestimmten Zeitabständen ausführt,
wobei das Fahrplanvorschlagerzeugungsprogramm (460) einen Fahrplanvorschlag erzeugt, in dem die Anzahl von Zügen (101), die in der vorbestimmten Zeitzone an dem aktuellen Tag in Betrieb zu nehmen sind, basierend auf dem Ergebnis der Bestimmung durch das Programm (440) zum Bestimmen einer Erhöhung oder Reduktion der Anzahl von Zügen (101), die in Betrieb zu nehmen sind, und den Informationen, die durch das Zuginformationsverwaltungssystem (133) zu den Zügen (101) gesammelt wurden, erhöht oder verringert wird, und
wobei das Fahrplan-Planungssystem (131) den Fahrplan basierend auf dem Fahrplanvorschlag aktualisiert.

3. Verkehrssystem nach Anspruch 2,
wobei der Rechenserver (112) ein Effektanalyseprogramm (480) zum Analysieren eines Effekts des Fahrplans speichert, der durch das Fahrplan-Planungssystem (131) aktualisiert wurde, und
wobei das Effektanalyseprogramm (480) den Effekt des durch das Fahrplan-Planungsprogramm (131) aktualisierten Fahrplans berechnet und basierend auf dem Effekt einen Parameter des Programms (440) zum Bestimmen einer Erhöhung oder Reduktion der Anzahl von Zügen (101), die in Betrieb zu nehmen sind, oder einen Parameter des Fahrplanvorschlagerzeugungsprogramms (460) einstellt.

4. Verkehrssystem nach Anspruch 3,
wobei der Datenserver (111) Hauptgleisstreckenzusammenführungs-Zeitinformationen (250), einschließlich der erforderlichen Zeit, damit ein Zug (101) in einem vorbestimmten Zustand mit einer Hauptgleisstrecke von einem vorbestimmten Nebengleis zusammengeführt wird, speichert,
wobei Zugzustandsinformationen (154), die das Gleis, auf dem jeder Zug (101) positioniert ist, und den Zustand jedes Zugs (101) auf der Gleisstrecke zeigen, in den Informationen zu den Zügen (101), die auf der Gleisstrecke in Betrieb genommen sind, die durch das Zuginformationsverwaltungssystem (133) gesammelt werden, umfasst sind, und
wobei das Fahrplanvorschlagerzeugungsprogramm (460) den Fahrplanvorschlag durch Einführen eines zuweisbaren Zugs zu der Gleisstrecke basierend auf den Hauptgleisstreckenzusammenführungs-Zeitinformationen (250) und den Zugzustandsinformationen (154) erzeugt.

5. Verfahren zum Betreiben von Zügen (101) auf einer Gleisstrecke mit einer Vielzahl von Bahnhöfen, wobei das Verfahren Folgendes umfasst:
das Verwenden eines oder mehrerer der Folgenden: automatischer Fahrkartenschranken (103), Überwachungskameras (104), die an der Vielzahl von Bahnhöfen angebracht sind, und Drahtlos-LANs, die zum Sammeln von Informationen betreffend Schätzungen der Anzahl von Fahrgästen, die die Vielzahl von Bahnhöfen betreten und verlassen, an der Vielzahl von Bahnhöfen angebracht sind;
Bereitstellen eines Fahrplan-Planungssystems (131) zum Bestimmen eines Fahrplans für die Gleisstrecke;
Bereitstellen eines Fahrplan-Vorschlagsystems (110) zum Vorschlagen einer Änderung des Fahrplans für die Gleisstrecke,
wobei das Fahrplan-Vorschlagsystem (110) Folgendes umfasst:
einen Datenserver (111) zum Speichern der Informationen, die an der Vielzahl von Bahnhöfen gesammelt werden und die Anzahl von Fahrgästen betreffen, und das ferner einen Rechenserver (112) umfasst, der ein Reisenachfragevorhersageprogramm (400), ein Programm (420) zur Vorhersage der Anzahl von Fahrgästen, die auf Züge (101) warten, und ein Programm (440) zum Bestimmen eines Anstiegs oder einer Reduktion der Anzahl von Zügen (101), die in Betrieb zu nehmen sind, speichert,
Verwenden des Datenservers (111), um die Anzahl von Fahrgästen zu speichern, die einen ersten Bahnhof betreten, der in der Vielzahl von Bahnhöfen in vorbestimmten Zeitzonen in der Vergangenheit umfasst ist, und die einen zweiten Bahnhof verlassen, der in der Vielzahl von Bahnhöfen umfasst ist, und sich von dem ersten Bahnhof unterscheidet;
Verwenden des Rechenservers (112), um zu vorbestimmten Zeitabständen das Reisenachfragevorhersageprogramm (400), das Programm (420) zur Vorhersage der Anzahl von Fahrgästen, die auf Züge (101) warten, und ein Programm (440) zum Bestimmen eines Anstiegs oder einer Reduktion der Anzahl von Zügen (101), die in Betrieb zu nehmen sind, auszuführen; und
Verwenden des Reisenachfragevorhersageprogramms (400), um die Anzahl von Fahrgästen, die den ersten Bahnhof in der vorbestimmten Zeitzone an einem aktuellen Tag betreten und den zweiten Bahnhof verlassen, basierend auf der in dem Datenserver (111) gespeicherten Anzahl der Fahrgäste vorherzusagen, die den ersten Bahnhof in der vorbestimmten Zeitzone in der Vergangenheit betreten und den zweiten Bahnhof verlassen haben;
Verwenden des Programms (420) zum Vorhersagen der Anzahl von Fahrgästen, die auf Züge (101) warten, um basierend auf der vorhergesagten Anzahl von Fahrgästen durch das Reisenachfragevorhersageprogramm die Anzahl von Fahrgästen, die auf Züge (101) an der Vielzahl von Bahnhöfen in der vorbestimmten Zeitzone am aktuellen Tag warten, vorherzusagen;
Verwenden des Programms (440) zum Bestimmen eines Anstiegs oder einer Reduktion der Anzahl von Zügen (101), die in Betrieb zu nehmen sind, um basierend auf dem Vergleich der vorhergesagten Anzahl von Fahrgästen, die an der Vielzahl von Bahnhöfen in der vorbestimmten Zeitzone an dem aktuellen Tag auf Züge warten, mit einem Referenzwert (XO), zu bestimmen, ob die Anzahl von Zügen (101), die in der vorbestimmten Zeitzone an dem aktuellen Tag in Betrieb zu nehmen sind, erhöht oder verringert werden soll;
Verwenden des Fahrplan-Planungssystems (131), um einen Fahrplan für die vorbestimmte Zeitzone an dem aktuellen Tag auf einen Fahrplan zu aktualisieren, in dem die Anzahl von Zügen (101), die in Betrieb zu nehmen sind, basierend auf der Bestimmung, die durch das Fahrplan-Vorschlagsystem (110) vorgenommen wurde, ob die Anzahl von Zügen (101), die in Betrieb zu nehmen sind, erhöht oder verringert werden soll, erhöht oder verringert wird; und
zusätzliches Betreiben eines Zugs (101), wenn bestimmt wird, dass eine Differenz zwischen der vorhergesagten Anzahl von Fahrgästen und dem Referenzwert (XO) größer als eine Obergrenze eines Stauschwellenwertbereichs ist, und Ausfallenlassen eines Zugs (101), wenn bestimmt wird, dass die Differenz zwischen der vorhergesagten Anzahl von Fahrgästen und dem Referenzwert (XO) kleiner ist als eine Untergrenze des Stauschwellenwertbereichs.

## Revendications

1. Système de transport pour faire fonctionner des trains (101) sur une ligne ferroviaire avec une pluralité de stations, comprenant :
un ou plusieurs parmi : des portillons automatiques (103), des caméras de surveillance (104) installées au niveau de la pluralité de stations, et des réseaux locaux sans fil installés au niveau de la pluralité de stations pour collecter des informations relatives à des estimations du nombre de passagers entrant dans et sortant de la pluralité de stations ;
un système de planification d'horaire (131) pour déterminer un horaire pour la ligne ferroviaire ; et
un système de proposition d'horaire (110) pour proposer un changement de l'horaire de la ligne ferroviaire,
dans lequel le système de proposition d'horaire (110) comprend :
un serveur de données (111) pour stocker les informations collectées au niveau de la pluralité de stations et relatives au nombre de passagers, et
un serveur de calcul (112) stockant un programme de prédiction de demande de déplacement (400), un programme (420) pour prédire les nombres de passagers qui attendent des trains (101) et un programme (440) pour déterminer une augmentation ou une réduction du nombre de trains (101) à exploiter,
dans lequel le serveur de données (111) stocke le nombre de passagers qui entrent dans une première station incluse dans la pluralité de stations dans des zones temporelles prédéterminées dans le passé, et sortent d'une deuxième station incluse dans la pluralité de stations et différente de la première station,
dans lequel le serveur de calcul (112) exécute, à des intervalles de temps prédéterminés, le programme de prédiction de demande de déplacement (400), le programme (420) pour prédire les nombres de passagers qui attendent des trains (101) et le programme (440) pour déterminer une augmentation ou une réduction du nombre de trains (101) à exploiter,
dans lequel le programme de prédiction de demande de déplacement (400) prédit le nombre de passagers qui entrent dans la première station dans la zone temporelle prédéterminée un jour en cours et sortent de la deuxième station, sur la base du nombre de passagers qui entrent dans la première station dans la zone temporelle prédéterminée dans le passé et sortent de la deuxième station stocké dans le serveur de données (111),
dans lequel le programme (420) pour prédire les nombres de passagers qui attendent des trains (101) prédit, sur la base du nombre de passagers prédit par l'intermédiaire du programme de prédiction de demande de déplacement (400), les nombres de passagers qui attendent des trains (101) au niveau de la pluralité de stations dans la zone temporelle prédéterminée le jour en cours,
dans lequel le programme (440) pour déterminer une augmentation ou une réduction du nombre de trains (101) à exploiter détermine, sur la base d'une comparaison des nombres de passagers prévus qui attendent des trains dans la pluralité de stations dans la zone temporelle prédéterminée le jour en cours avec une valeur de référence (XO), si le nombre de trains (101) à exploiter dans la zone temporelle prédéterminée le jour en cours doit être augmenté ou réduit, et
dans lequel le système de planification d'horaire (131) met à jour un horaire pour la zone temporelle prédéterminée du jour en cours à un horaire dans lequel le nombre de trains (101) à exploiter a été augmenté ou réduit sur la base de la détermination, effectuée par le système de proposition d'horaire (110), que le nombre de trains (101) à exploiter doit être augmenté ou réduit, moyennant quoi lorsqu'une différence entre le nombre de passagers prédit et la valeur de référence (XO) est déterminée comme étant supérieure à une limite supérieure d'une plage de seuil de congestion, un train (101) en plus est exploité, et lorsque la différence entre le nombre de passagers prédit et la valeur de référence (XO) est déterminée comme étant inférieure à une limite inférieure de la plage de seuil de congestion, un train (101) est annulé.

2. Procédé selon la revendication 1, comprenant en outre :
un système de gestion d'informations de trains (133) destiné à collecter des informations sur les trains (101) exploités sur la ligne ferroviaire,
dans lequel le serveur informatique (112) stocke en outre un programme de génération de proposition d'horaire (460) et exécute le programme de génération de proposition d'horaire (460) à des intervalles de temps prédéterminés,
dans lequel le programme de génération de proposition d'horaire (460) génère une proposition d'horaire dans laquelle le nombre de trains (101) à exploiter dans la zone temporelle prédéterminée le jour en cours a été augmenté ou réduit, sur la base du résultat de la détermination par le programme (440) pour déterminer une augmentation ou une réduction du nombre de trains (101) à exploiter, et des informations, collectées par le système de gestion d'informations de trains (133), des trains (101), et
dans lequel le système de planification d'horaire (131) met à jour l'horaire sur la base de la proposition d'horaire.

3. Système de transport selon la revendication 2,
dans lequel le serveur informatique (112) stocke un programme d'analyse d'effet (480) pour analyser un effet de l'horaire mis à jour par le système de planification d'horaire (131), et
dans lequel le programme d'analyse d'effet (480) calcule l'effet de l'horaire mis à jour par le système de planification d'horaire (131) et ajuste, sur la base de l'effet, un paramètre du programme (440) pour déterminer une augmentation ou une réduction du nombre de trains (101) à exploiter ou un paramètre du programme de génération de proposition d'horaire (460).

4. Système de transport selon la revendication 3,
dans lequel le serveur de données (111) stocke des informations de temps de fusion de ligne ferroviaire principale (250) comprenant le temps nécessaire pour qu'un train (101) dans un état prédéterminé fusionne avec une ligne ferroviaire principale à partir d'un branchement prédéterminé,
dans lequel des informations d'état de train (154) qui montrent la voie sur laquelle chaque train (101) est positionné et l'état de chaque train (101) sur la ligne ferroviaire sont incluses dans les informations sur les trains (101) exploités sur la ligne ferroviaire collectées par le système de gestion d'informations de trains (133), et
dans lequel le programme de génération de proposition d'horaire (460) génère la proposition d'horaire en introduisant un train attribuable sur la ligne ferroviaire sur la base des informations de temps de fusion de ligne ferroviaire principale (250) et des informations d'état de train (154).

5. Procédé d'exploitation de trains (101) sur une ligne ferroviaire avec une pluralité de stations, le procédé comprenant les étapes consistant à :
utiliser un ou plusieurs parmi : des portillons automatiques (103), des caméras de surveillance (104) installées au niveau de la pluralité de stations, et des réseaux locaux sans fil installés au niveau de la pluralité de stations pour collecter des informations relatives à des estimations du nombre de passagers entrant dans et sortant de la pluralité de stations ;
fournir un système de planification d'horaire (131) pour déterminer un horaire pour la ligne ferroviaire ;
fournir un système de proposition d'horaire (110) pour proposer un changement dans l'horaire pour la ligne ferroviaire, le système de proposition d'horaire (110) comprenant : un serveur de données (111) pour stocker les informations collectées au niveau de la pluralité de stations et liées au nombre de passagers ; et comprenant en outre un serveur de calcul (112) stockant un programme de prédiction de demande de déplacement (400), un programme (420) pour prédire les nombres de passagers qui attendent des trains (101) et un programme (440) pour déterminer une augmentation ou une réduction du nombre de trains (101) à exploiter,
utiliser le serveur de données (111) pour stocker le nombre de passagers qui entrent dans une première station incluse dans la pluralité de stations dans des zones temporelles prédéterminées dans le passé et sortent d'une deuxième station incluse dans la pluralité de stations et différente de la première station ;
utiliser le serveur de calcul (112) pour exécuter, à des intervalles de temps prédéterminés, le programme de prédiction de demande de déplacement (400), le programme (420) pour prédire les nombres de passagers qui attendent des trains (101) et le programme (440) pour déterminer une augmentation ou une réduction du nombre de trains (101) à exploiter ; et
utiliser le programme de prédiction de demande de déplacement (400) pour prédire le nombre de passagers qui entrent dans la première station dans la zone temporelle prédéterminée un jour en cours et sortent de la deuxième station, sur la base du nombre de passagers qui entrent dans la première station dans la zone temporelle prédéterminée dans le passé et sortent de la deuxième station stocké dans le serveur de données (111) ;
utiliser le programme (420) pour prédire les nombres de passagers qui attendent des trains (101) pour prédire, sur la base du nombre de passagers prédit par l'intermédiaire du programme de prédiction de demande de déplacement, les nombres de passagers qui attendent des trains (101) au niveau de la pluralité de stations dans la zone temporelle prédéterminée le jour en cours ;
utiliser le programme (440) pour déterminer une augmentation ou une réduction du nombre de trains à exploiter pour déterminer, sur la base d'une comparaison des nombres de passagers prévus qui attendent des trains (101) dans la pluralité de stations dans la zone temporelle prédéterminée le jour en cours avec une valeur de référence (XO), si le nombre de trains (101) à exploiter dans la zone temporelle prédéterminée le jour en cours doit être augmenté ou réduit ;
utiliser le système de planification d'horaire (131) pour mettre à jour un horaire pour la zone temporelle prédéterminée du jour en cours à un horaire dans lequel le nombre de trains (101) à exploiter a été augmenté ou réduit sur la base de la détermination, effectuée par le système de proposition d'horaire (110), que le nombre de trains (101) à exploiter doit être augmenté ou réduit ; et
exploiter un train (101) en plus lorsqu'une différence entre le nombre de passagers prédit et la valeur de référence (XO) est déterminée comme étant supérieure à une limite supérieure d'une plage de seuil de congestion, et annuler un train (101) lorsque la différence entre le nombre de passagers prédit et la valeur de référence (XO) est déterminée comme étant inférieure à une limite inférieure de la plage de seuil de congestion.
